(19) Europäisches Patentamt

European Patent Office

Office européen des brevets

(11) **EP 2 530 118 B1**

(12) **EUROPEAN PATENT SPECIFICATION**

(45) Date of publication and mention
of the grant of the patent:
**07.12.2016 Bulletin 2016/49**

(51) Int Cl.:
*B29C 47/00* (2006.01)          *B29C 47/06* (2006.01)
*B32B 27/08* (2006.01)          *B29C 47/14* (2006.01)
*B32B 27/30* (2006.01)          *C08L 27/12* (2006.01)
*C08J 5/18* (2006.01)            *C08L 27/16* (2006.01)
*B29K 105/00* (2006.01)

(21) Application number: **11737013.0**

(22) Date of filing: **26.01.2011**

(86) International application number:
**PCT/JP2011/051405**

(87) International publication number:
**WO 2011/093300 (04.08.2011 Gazette 2011/31)**

(54) **FROSTED FLUORINE FILM, LAYERED FROSTED FLUORINE FILM, DECORATIVE LAYERED FROSTED FLUORINE FILM, LAYERED SHEET, MOLDED LAMINATE WITH SAME LAYERED THEREON, AND MANUFACTURING METHOD THEREFOR**

VEREISTER FLUORFILM, GESCHICHTETER VEREISTER FLUORFILM, DEKORATIVER GESCHICHTETER FLUORFILM, GESCHICHTETE FOLIE, GEFORMTES LAMINAT MIT DER DARAUF GESCHICHTETEN FOLIE SOWIE HERSTELLUNGSVERFAHREN DAFÜR

FILM DE FLUOR GIVRÉ, FILM DE FLUOR GIVRÉ EN COUCHES, FILM DE FLUOR GIVRÉ DÉCORATIF EN COUCHES, FEUILLE EN COUCHES, STRATIFIÉ MOULÉ RECOUVERT DE LA MÊME FEUILLE EN COUCHES, ET LEUR PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.09.2010   JP 2010199814
30.04.2010   JP 2010105446
26.01.2010   JP 2010013887**

(43) Date of publication of application:
**05.12.2012   Bulletin 2012/49**

(73) Proprietor: **Mitsubishi Rayon Co., Ltd.
Tokyo 100-8253 (JP)**

(72) Inventors:
• **ABE, Junichi
Tokyo 100-8253 (JP)**

• **ABE, Yoshinori
Tokyo 100-8253 (JP)**

(74) Representative: **Ter Meer Steinmeister & Partner Patentanwälte mbB
Nymphenburger Straße 4
80335 München (DE)**

(56) References cited:
**JP-A- 1 301 724      JP-A- 8 059 748
JP-A- 51 076 345     US-A- 4 617 350**

• **DATABASE CA [Online] CHEMICAL ABSTRACTS SERVICE, COLUMBUS, OHIO, US; Segawa, Masahiro et al: "Poly(vinylidene fluoride) compositions", XP002738744, retrieved from STN Database accession no. 85:109411 & JP S51 76345 A 1 July 1976 (1976-07-01)**

EP 2 530 118 B1

**Description**

The present invention relate to a fluorine matt film, a fluorine matt laminated film, a fluorine matt decorative laminated film, a laminated sheet, and a laminated molded article with these laminated thereon which has a good appearance as well as a fine matte appearance and an excellent solvent resistance, and also to provide a producing method.

BACKGROUND ART

Since fluorine films such as vinylidene fluoride resins have an excellent weathering resistance, solvent resistance and contamination resistance, it is widely used as a protective film which is laminated on the surface of various substrates such as plastics, glasses, slates, rubbers, metal boards and woods. Also, a substrate whose surface is protected with a fluorine film is used for many much purposes such as interior materials and exterior materials of the building and furniture. However, specifically as for the substrates such as wall paper and leather furniture used in doors, high quality of the image comes to be required in late years, and many things obtained by laminating a matt film come to be used.

As a method for producing this matt film, (1) a method by forming fine irregularities on a film surface using a metal or rubber mat roll whose surface is rough and by heat molding it, (2) a method by forming fine irregularities by spraying fine particles such as sand or metal to a film surface to be treated

(sandblasting method), (3) a method by coating a matting agent on a film to be treated and (4) a method by adding a fine organic or inorganic filler (matting agent) to a resin for constituting a film are mainly known.

However, in method (1) for matting a film using a matt roll, there are problems that the mat roll is easy to be clogged by an additive such as a UV absorber which is added to a fluorine resin, and that a homogeneous matt film is hard to be obtained because the thickness irregularities just become gloss irregularities if it is a thin film.

Also, in sandblasting method (2), there is a problem that the film surface to be treated is extended and fractured at the time of sandblasting if it is a thin soft film.

Further, in method (3) by coating a matting agent, it is not easy to coat the matting agent on the surface of the fluorine resin because the matting agent is incohesive (non-adhesive) to the fluorine resin.

Also, in method (4) by adding a matting agent to a resin for constituting a film, there is no problem such as that described above. However, void is easy to be generated in the film obtained and the mechanical strength may be lowered when using an inorganic matting agent. Also, the transparency of the film may be lowered by the addition of the inorganic matting agent. Further, there may be a problem that the fluorine resin was colored by heating at high temperature in the melting extrusion pelletizing step in which the inorganic matting agent is mixed with the fluorine resin, or in the step in which the fluorine resin, to which the matting agent, specifically the inorganic matting agent, is compounded, is heated up to the temperature that is a certain degree higher than the crystalline melting point of the fluorine resin to make a film by melting extrusion.

In order to solve these problems, there are many proposals of a method in which an organic matting agent is used.

For example, patent document 1 proposes a vinylidene fluoride resin film containing a cross-linked acrylic resin and a vinylidene fluoride in the surface layer, which has an excellent appearance character, surface gloss, tensile elongation and heat workability. Also, patent document 2 proposes a surface protective film for interior or exterior building materials using a resin composition containing a vinylidene fluoride resin, a methacrylic acid ester resin and a cross-linked acrylic resin with a predetermined particle diameter, which has an excellent appearance character, surface gloss, heat workability and weathering resistance.

However, the films obtained in patent document 1 and patent document 2 do not have sufficient solvent resistance.

Also, patent document 3 proposes an acrylic resin film material having surface hardness, heat resistance and transparency or mat character available to the vehicle purposes in which the molded article is not whitened when insert molding or in-mold molding is carried out. This patent document 3 discloses a method by kneading an inorganic filler or a crosslinking polymer particle, a method by copolymerizing an epoxy group-containing monomer, and a method by using a linear polymer having a hydroxyl group, as well as discloses that a fluorine resin film is placed on the outermost layer.

However, patent document 3 does not disclose any concrete policies to realize a good appearance and a fine matte appearance with keeping the solvent resistance.

PRIOR ART DOCUMENT

PATENT DOCUMENT

Patent document 1: JP 2001-205755 A
Patent document 2: JP 2008-7709 A
Patent document 3: JP 2005-139416 A

JP-A-51076345 discloses a film comprising 100 parts by mass of polyvinylidene fluoride and 1-20 parts by mass of a non-crosslinked acrylic resin of a copolymer of 2-hydroxy-4-(3-methacryloxy-2-hydroxypropoxy) benzophenone with methyl or ethyl methacrylate.

SUMMARY OF THE INVENTION

PROBLEM TO BE SOLVED BY THE INVENTION

The problem of the present invention is to provide a fluorine matt film, a fluorine mat laminated film, a fluorine mat decorative laminated film, a laminated sheet, and a laminated molded article with these laminated thereon which has a good appearance as well as a fine matte appearance and an excellent solvent resistance, and also to provide a producing method.

MEANS OF SOLVING THE PROBLEM

The scope of the present invention is a fluorine matt film (F1) which comprises
100 parts by mass of a fluorine resin (A) and
1 to 18 parts by mass (with respect to 100 parts by mass of the fluorine resin (A)) of a non-crosslinked acrylic resin (B), wherein the solubility parameter (SPF) of fluorine resin (A) and the solubility parameter (SPA) of non-crosslinked acrylic resin (B) satisfy the following equations (1) and 2, and
wherein the non-crosslinked acrylic resin (B) is a hydroxyl group-containing polymer, which is a polymer obtained by copolymerizing a monomer component which contains 1 to 80 mass% of a hydroxyalkyl (meth)acrylate having a hydroxyl group-containing alkyl group with a carbon number of 1 to 8, 20 to 99 mass% of alkyl methacrylate having an alkyl group with a carbon number of 1 to 13, and 0 to 79 mass% of alkyl acrylate having an alkyl group with a carbon number of 1 to 8.

$$SPA - SPF \geq 5 \ J^{1/2} cm^{-3/2} \qquad (1)$$

$$SPA - SPF \leq 6.8 \ J^{1/2} \ cm^{-3/2} \quad (2)$$

Also, the scope of the present invention is a method for producing above-mentioned fluorine matt film (F1), comprising a molding step by a T-die method.
Also, the scope of the present invention is a fluorine matt laminated film (F2) obtained by laminating an acrylic resin layer (II) on a fluorine mat resin layer (I) which comprises
100 parts by mass of fluorine resin (A) and
1 to 18 parts by mass (with respect to 100 parts by mass of the fluorine resin (A)) of non-crosslinked acrylic resin (B), and wherein the solubility parameter (SPF) of fluorine resin (A) and the solubility parameter (SPA) of non-crosslinked acrylic resin (B) satisfy above-mentioned equations (1) and 2, and
wherein the non-crosslinked acrylic resin (B) is a hydroxyl group-containing polymer, which is a polymer obtained by copolymerizing a monomer component which contains 1 to 80 mass% of a hydroxyalkyl (meth)acrylate having a hydroxyl group-containing alkyl group with a carbon number of 1 to 8, 20 to 99 mass% of alkyl methacrylate having an alkyl group with a carbon number of 1 to 13, and 0 to 79 mass% of alkyl acrylate having an alkyl group with a carbon number of 1 to 8.
Also, the scope of the present invention is a method for producing above-mentioned fluorine matt laminated film (F2), comprising a molding step in which the fluorine matt resin layer (I) and the acrylic resin layer (II) are coextruded.
Also, the scope of the present invention is a fluorine matt decorative laminated film (F3) which further comprises a decorative layer (III) on at least one side of above-mentioned fluorine matt laminated film (F2).
Also, the scope of the present invention is a laminated sheet (F4) obtained by laminating a thermoplastic layer (IV) on a film which is selected from the group consisting of above-mentioned fluorine matt film (F1), above-mentioned fluorine matt laminated film (F2), and above-mentioned fluorine matt decorative laminated film (F3).
Also, the scope of the present invention is a laminated molded article obtained by laminating a film or sheet on a substrate (V), wherein the film or sheet is selected from the group consisting of above-mentioned fluorine matt film (F1), above-mentioned fluorine matt laminated film (F2), above-mentioned fluorine matt decorative laminated film (F3), and above-mentioned laminated sheet (F4).

EFFECT OF THE INVENTION

According to the present invention, a film, a sheet, and a laminated molded article which have a solvent resistance and a good appearance as well as a good fine matte appearance can be obtained. These can be preferably used for various purposes such as interior or exterior purposes of an automobile or a building and the exterior purposes under a strong direct sunlight.

MODE FOR CARRYING OUT THE INVENTION

[Fluorine resin (A)]

Examples of fluorine resin (A) used in the present invention include, for example, polyvinylidene fluorides, ethylene - tetrafluoroethylene copolymers, polychlorotrifluoroethylenes, polytetrafluoroethylenes, polyvinyl fluorides, tetrafluoroethylene - hexafluoropropylene copolymers, tetrafluoroethylene - perfluoro(propyl vinyl ether) copolymers, tetrafluoroethylene - vinylidene fluoride copolymers, copolymers of vinylidene fluoride and an acrylic monomer such as an alkyl (meth)acrylate, and mixed resins with another resin containing a vinylidene fluoride polymer as a main component. This can be used alone, or in combination with two or more kinds. In Particular, vinylidene fluoride polymers are preferable in terms of the optical transparency and fine matte appearance generation of the fluorine matt film obtained as well as in terms of the compatibility of fluorine resin (A) and the non-crosslinked acrylic resin (B).
The vinylidene fluoride polymer may be, but should not specifically be limited to as long as it is a vinyl polymer containing a vinylidene fluoride monomer unit, a homopolymer of vinylidene fluoride or a copolymer of vinylidene fluoride and another vinyl compound monomer. Examples of the other vinyl monomer which is copolymerizable with vinylidene fluoride include, for example, fluorinated vinyl monomers such as vinyl fluoride, ethylene tetrafluoride and ethylene chloride trifluoride, propylene hexafluoride, and vinyl monomers such as styrene, ethylene, butadiene and propylene.

[Non-crosslinked acrylic resin (B)]

The solubility parameter (SPA) of non-crosslinked acrylic resin (B) used in the present invention must be 5 $J^{1/2}cm^{-3/2}$ higher than the solubility parameter (SPF) of fluorine resin (A). By using this non-crosslinked acrylic resin (B), the fluorine matt film (F1) obtained, the fluorine matt laminated film (F2), the fluorine matt decorative laminated film (F3) and laminating sheet (F4) come to have an excellent appearance and matte appearance, as well as a good solvent resistance.
In the present invention, the solubility parameter refers to value ($\sigma$) represented by the following Fedors equation.

<Fedors equation>

$$\sigma = (E_v / v)^{1/2} = (\Sigma\Delta e_i / \Sigma\Delta v_i)^{1/2}$$

$\sigma$: solubility parameter (unit: $J^{1/2}cm^{-3/2}$)
$E_v$: evaporation energy
$v$: mol volume
$\Delta e_i$: evaporation energy of each atom or atomic group
$\Delta v_i$: mol volume of each atom or atomic group

The evaporation energy and mol volume of each atom or atomic group which is used for calculation by the above equation depend on "R. F. Fedors, Polym. Eng. Sci., 14, 147 (1974)".
Further, the difference ($\Delta\sigma$: SPA - SPF) between SPA and SPF must be 5 $J^{1/2}cm^{-3/2}$ or more. Also, the upper limit of $\Delta\sigma$ is 6.8 or less, and preferably 6.3 or less, in terms of the matte appearance generation of fluorine matt film (F1) of the present invention, the fluorine matt laminated film (F2), the fluorine matt decorative laminated film (F3) and laminating sheet (F4) as well as in terms of the dispersibility of non-crosslinked acrylic resin (B) in the fluorine matt film (F1).
"Non-crosslinked acrylic resin" refers to an acrylic resin which does not contain a multifunctional monomer unit such as a crosslinking agent monomer unit and a graft crossing agent monomer unit. As the non-crosslinked acrylic resin (B) used in the present invention, known acrylic resins can be used as long as it has an SPA which satisfies the above requirement.
The non-crosslinked acrylic resin (B) can be selected, for example, from homopolymers or copolymers, which have, as a main constitutional unit, a constitutional unit obtained from at least one methacrylate selected from the group consisting of methyl methacrylate, hydroxyethyl methacrylate, ethyl methacrylate and propyl methacrylate, and which has, if necessary, a constitutional unit obtained from another vinyl monomer such as an alkyl acrylate with a carbon number of 1 to 8, vinyl acetate, vinyl chloride, styrene, acrylonitrile and methacrylonitrile, and from acrylic polymers which have a (meth)acrylate unit as a main constitutional unit, as long as it has an SPA described above. This can be used alone, or in combination. Note that, the term of "(meth)acrylate" means acrylate or methacrylate.

The non-crosslinked acrylic resin (B) having an SPA described above is a resin consisting of a hydroxyl group-containing polymer. The resins consisting of a hydroxyl group-containing polymer is particularly preferable in terms of the good matting appearance of fluorine matt film (F1) obtained, the fluorine matt laminated film (F2), the fluorine matt decorative laminated film (F3) and laminating sheet (F4). Examples of this hydroxyl group-containing polymer include, for example, a hydroxyl group-containing polymer (1) which is shown below. By using hydroxyl group-containing polymer (1), the elongation degree of fluorine matt film (F1) obtained is lowered little in comparison with the elongation degree of the fluorine resin. As a result, the fluorine matt film (F1), the fluorine matt laminated film (F2), the fluorine matt decorative laminated film (F3) and the laminating sheet (F4) of the present invention are difficult to generate a film cutting during a secondary processing, for example.

Hydroxyl group-containing polymer (1) is a polymer obtained by copolymerizing a monomer component which contains 1 to 80 mass% of a hydroxyalkyl (meth)acrylate having a hydroxyl group-containing alkyl group with a carbon number of 1 to 8, 20 t0 99 mass% of alkyl methacrylate having an alkyl group with a carbon number of 1 to 13, and 0 to 79 mass% of alkyl acrylate having an alkyl group with a carbon number of 1 to 8. Note that, the term of "(meth)acrylic acid" means acrylic acid or methacrylic acid.

Examples of the hydroxyalkyl (meth)acrylate having a hydroxyl group-containing alkyl group with a carbon number of 1 to 8 which constitutes hydroxyl group-containing polymer (1) include, for example, 2-hydroxyethyl methacrylate, 2-hydroxypropyl methacrylate, 2,3-dihydroxypropyl methacrylate, 2-hydroxyethyl acrylate and 4-hydroxybutyl acrylate. This can be used alone, or in combination with two or more kinds. Among these, 2-hydroxyethyl methacrylate is particularly preferable in terms of the matte appearance generation.

The content of the hydroxyalkyl (meth)acrylate having a hydroxyl group-containing alkyl group with a carbon number of 1 to 8 in 100 mass% of the monomer components is 1 to 80 mass%. When the content is 1 mass% or more, preferably 5 mass% or more, and more preferably 20 mass% or more, the SPA easily becomes in the range specified in the present invention and the matting effects (matte appearance and appearance) of fluorine matt film (F1) of the present invention, the fluorine matt laminated film (F2), the fluorine mtat decorative laminated film (F3) and laminating sheet (F4) tend to become good. Also, when the content is 80 mass% or less, and preferably 50 mass% or less, the dispersibility of hydroxyl group-containing polymer (1) becomes better and it is suppressed that a non-dispersed particle of hydroxyl group component polymer (1) in the fluorine matt film (F1) exist, and film formation character tends to become good.

Examples of the alkyl methacrylate having an alkyl group with a carbon number of 1 to 13 which constitutes hydroxyl group-containing polymer (1) include, for example, methyl methacrylate, ethyl methacrylate, n-propyl methacrylate, i-propyl methacrylate, n- butyl methacrylate, i-butyl methacrylate and t-butyl methacrylate. This can be used alone, or in combination with two or more kinds. Among these, methyl methacrylate is particularly preferable in terms of the weathering resistance.

The content of the alkyl methacrylate having an alkyl group with a carbon number of 1 to 13 in 100 mass% of the monomer components is 20 mass% or more and preferably 30 mass% or more in terms of the weathering resistance. Also, the content is 99 mass% or less and preferably 90 mass% or less in terms of the matte appearance generation.

Examples of the alkyl acrylate having an alkyl group with a carbon number of 1 to 8 which constitutes hydroxyl group-containing polymer (1) include, for example, methyl acrylate, ethyl acrylate, n-propyl acrylate, i-propyl acrylate, n- butyl acrylate, i-butyl acrylate, t-butyl acrylate and 2-ethylhexyl acrylate. This can be used alone, or in combination with two or more kinds.

The content of the alkyl acrylate having an alkyl group with a carbon number of 1 to 8 in 100 mass% of the monomer components may be 0 mass%, but is preferably 0.5 mass% or more and 5 mass% or more in terms of the dispersibility of non-crosslinked acrylic resin (B). Also, the content is 79 mass% or less, preferably 40 mass% or less, and more preferably 25 mass% or less in terms of the weathering resistance and heat resistance.

The glass-transition temperature of non-crosslinked acrylic resin (B) is preferably 90°C or lower and more preferably 80°C or lower in terms of the matte appearance generation of fluorine matt film (F1) of the present invention, the fluorine matt laminated film (F2), the fluorine mtat decorative laminated film (F3) and laminating sheet (F4) as well as in terms of the dispersibility of non-crosslinked acrylic resin (B) in the fluorine mtat film (F1). In these cases, the content of the alkyl acrylate having an alkyl group with a carbon number of 1 to 8 in the monomer component is preferably 0.5 to 30 mass% and more preferably 0.5 to 20 mass%. Note that, the glass-transition temperature of non-crosslinked acrylic resin (B) is calculated using the Tg value (Polymer Handbook [Polymer Handbook, J. Brandrup, Interscience, 1989]) of the homopolymer of each monomer component by the FOX equation.

The intrinsic viscosity of non-crosslinked acrylic resin (B) is preferably 0.3 L/g or less and more preferably 0.12 L/g or less in terms of the good dispersibility of non-crosslinked acrylic resin (B) in the fluorine matt film (F1) of the present invention and in terms of decreasing non-melted component of fluorine matt film (F1) in hydroxyl group component polymer (1), as well as in terms of the good appearance of fluorine matt film (F1) of the present invention, the fluorine matt laminated film (F2), the fluorine matt decorative laminated film (F3) and laminating sheet (F4). Also, the intrinsic viscosity is preferably 0.01 L/g or more in terms of the good matte appearance of fluorine matt film (F1) of the present invention, the fluorine matt laminated film (F2), the fluorine matt decorative laminated film (F3) and laminating sheet (F4). Note that, the intrinsic viscosity of non-crosslinked acrylic resin (B) was measured at 25°C, using AVL-2C auto viscometer made by SUN Electronic Industries Corporation, using chloroform as a solvent.

In order to control the intrinsic viscosity of non-crosslinked acrylic resin (B), a polymerization modifier such as a mercaptan can be used. Examples of the mercaptan include, for example, n-octyl mercaptan, n-dodecyl mercaptan and t-dodecyl mercaptan. The content of the mercaptan is preferably, but should not specifically be limited to, 0.01 part or more by mass with respect to 100 parts by mass of the monomer constituting non-crosslinked acrylic resin in terms of the dispersibility. Also, it is preferably 1 part or less by mass in terms of good matte appearance.

The Mw (mass average molecular weight) / Mn (number average molecular weight) of non-crosslinked acrylic resin (B) is preferably 2.2 or less and more preferably 2.0 or less. The smaller Mw/Mn makes the molecular weight distribution of non-crosslinked acrylic resin (B) closer to monodispersed state and the high molecular weight component is decreased, and it is thereby suppressed to generate non-melted component resulting in the bad appearance such as a fish eye in the fluorine matt film (F1) of the present invention, the fluorine matt laminated film (F2), the fluorine matt decorative laminated film (F3) and laminating sheet (F4). Note that, the Mw/Mn means a value obtained by the measurement by gel permeation chromatography (GPC) under the following GPC measurement conditions.

<GPC measurement conditions>

    Equipment used: HLC-8320GPC system made by TOSOH CORPORATION
    Column: two TGKgel SupaerHZM-H (made by TOSOH CORPORATION, trade name)
    Eluent: tetrahydrofuran
    Column temperature: 40°C
    Detector: refractive index detector (RI)

Examples of the method for producing non-crosslinked acrylic acid resin (B) includes, for example, suspension polymerization and emulsion polymerization.

Examples of the initiator used for suspension polymerization include, for example, organic peroxides and azo compounds. Examples of the suspension stabilizer include, for example, organic colloidal polymer materials, inorganic colloidal polymer materials, inorganic fine particles and the combinations thereof with a surfactant. Among these, organic suspension stabilizers are preferable and examples thereof include, for example, a copolymer of methyl methacrylate and potassium methacrylate, and a copolymer of methyl methacrylate, potassium methacrylate and sodium 2-sulfoethyl methacrylate, which are disclosed in JP 1-168702 A. When the inorganic suspension stabilizer is used, it can preferably be removed by the treatment after polymerization such as washing and examples thereof include, for example, calcium phosphate. The amount used of the suspension stabilizer is preferably, but should not specifically be limited to, 0.1 part or more by mass in terms of stabilizing suspension polymerization. Also, it is preferably 10 parts or less by mass in terms of the economic efficiency.

Usually, the suspension polymerization is carried out using an aqueous suspension of a monomer with a polymerization initiator in the presence of a suspension stabilizer. Also, when suspension polymerization is carried out, a polymer which is soluble in the monomer is dissolved in the monomer to carry out the polymerization, if necessary. After the suspension polymerization, it is preferable to remove a cullet by the sieving operation from the beads material obtained by suspension polymerization, wherein the cullet results in bad appearance and is an insoluble component in chloroform which is generated during the polymerization. The sieve used in the sieving operation preferably has 150 meshes or less and more preferably 50 meshes or less if a sufficient yield is realized. Also, it preferably has 50 meshes or more and more preferably 150 meshes or more if the cullet is sufficiently removed.

It is preferable that the non-crosslinked acrylic resin (B) does not contain a cullet of 300 μm or more, and it is more preferable that it does not contain a cullet of 100 μm or more.

When the polymerization is carried out using an inorganic suspension stabilizer, in order to suppress the generation of the fish eye in the fluorine matt film (F1) obtained, the fluorine matt laminated film (F2), the fluorine matt decorative laminated film (F3) and laminating sheet (F4) and to suppress the print missing, it is preferable that the beads material of non-crosslinked acrylic resin (B) obtained by suspension polymerization is washed with water to lower the content of the inorganic component in the non-crosslinked acrylic resin (B).

Examples of the method for this water washing include, for example, a dispersing washing method in which solid-liquid separation is carried out after a cleaning liquid such as nitric acid is added to the beads material of non-crosslinked acrylic resin (B) and dispersed, and a passing washing method in which a cleaning liquid is passed through the beads material of non-crosslinked acrylic resin (B). The washing temperature is preferably 10 to 90°C in terms of the washing efficiency.

In the above-mentioned post-treatment such as sieving operation and water washing after the polymerization, in order to efficiently remove a cullet by sieving operation without lowering the product yield as well as to efficiently remove an inorganic component by washing, the average particle diameter of hydroxyl group-containing polymer (1) is preferably 300 µm or less and 100 µm or less. Also, the average particle diameter is preferably 10 µm or more in terms of the handling of the polymer. Note that, the average particle diameter of hydroxyl group-containing linear polymer (1) can be measured using a laser diffraction scattering-type particle size distribution measuring apparatus LA-910 made by HORIBA, Ltd.

[Fluorine mat film (F1)]

The fluorine matt film (F1) of the present invention contains 100 parts by mass of fluorine resin (A) and 1 to 18 parts by mass of non-crosslinked acrylic resin (B) (with respect to 100 parts by mass of the fluorine resin (A)). When the compounding amount of non-crosslinked acrylic resin (B) is 1 part or more by mass with respect to 100 parts by mass of the fluorine resin (A), the matt character of fluorine mat film (F1) of the present invention, the fluorine matt laminated film (F2), the fluorine matt decorative laminated film (F3) and laminating sheet (F4) becomes good. Further, from the viewpoint of high quality of the image, the 60 degree surface gloss of fluorine matt film (F1), the fluorine matt laminated film (F2), the fluorine mtat decorative laminated film (F3) and laminating sheet (F4) is preferably low. Generally, the 60 degree surface gloss of 45 % or less generates high quality class. Thus, the compounding amount of non-crosslinked acrylic resin (B) is preferably 3 parts or more by mass. Note that, the surface gloss of fluorine matt film (F1) of the present invention, the fluorine matt laminated film (F2), the fluorine matt decorative laminated film (F3) and laminating sheet (F4) is a value measured according to JIS Z8741.

On the other hand, when the compounding amount of non-crosslinked acrylic resin (B) is 18 parts or less by mass with respect to 100 parts by mass of the fluorine resin (A), the solvent resistance of fluorine matt film (F1) of the present invention, the fluorine matt laminated film (F2), the fluorine matt decorative laminated film (F3) and laminating sheet (F4) becomes good. Further, from the viewpoint of the cost-benefit for compounding the non-crosslinked acrylic resin (B), it is preferably 15 parts or less by mass and more preferably 13 parts or less by mass.

The solubility parameter (SPFA) of fluorine matt film (F1) is preferably 17 to 18 $J^{1/2}cm^{-3/2}$. By this, the solvent resistance of fluorine matt film (F1) of the present invention, the fluorine matt laminated film (F2), the fluorine matt decorative laminated film (F3) and laminating sheet (F4) tends to become better. In the present invention, the solubility parameter (SPFA) of fluorine mat film (F1) is the sum of the value obtained by multiplying the solubility parameter (SPFA) of fluorine resin (A) by the mass ratio of the fluorine resin (A) and of the value obtained by multiplying the solubility parameter (SPA) of non-crosslinked acrylic resin (B) by the mass ratio of non-crosslinked acrylic resin (B). If each of them is one kind, it is calculated by the following equation.

$$(SPF \times M_A) / (M_A + M_B) + (SPA \times M_B) / (M_A + M_B)$$

SPF: solubility parameter of fluorine resin (A)
SPA: solubility parameter of non-crosslinked acrylic resin (B)
$M_A$: mass of fluorine resin (A)
$M_B$: mass of non-crosslinked acrylic resin (B)

The solubility parameter (SPF) of fluorine resin (A) and the solubility parameter (SPA) of non-crosslinked acrylic resin (B) are respectively values (σ) which are calculated by the above-mentioned Fedors equation.

The thickness of fluorine matt film (F1) is preferably 5 to 500 µm, more preferably 15 to 200 µm, and particularly preferably 30 to 100 µm in terms of the laminate character, film formation character or secondary processing character of fluorine matt film (F1).

It is also a preferred embodiment that irregularities are formed on the surface of fluorine matt film (F1) [and the fluorine matt laminated film (F2), the fluorine matt decorative laminated film (F3) and laminating sheet (F4)]. In this case, average spacing (Sm) of the surface irregularities is preferably 30 µm or less. If the non-crosslinked acrylic resin (B) is compounded and this Sm is 30 µm or less, the fluorine matt film (F1), the fluorine matt laminated film (F2), the fluorine matt decorative laminated film (F3) and laminating sheet (F4) tend to have a fine matting condition and a particularly good matte appearance. Note that, average spacing (Sm) of the surface irregularities is a value which is measured according to JIS B0601.

Various additives such as antioxidants, heat stabilizers, plasticizers, lubricants, antistatic agents, flame retardants, fillers, delustering agents, processing auxiliary agents, impact resistance auxiliary agents, antibacterial agents, fungicides, foaming agents, mold lubricants, coloring agents, ultraviolet absorbers and thermoplastic polymers can be compounded in the fluorine mat film (F1), if necessary. Examples of the antioxidant include, for example, phenol antioxidants, sulfur antioxidants and phosphorus antioxidants. Examples of the heat stabilizer include, for example, hindered phenol heat stabilizers, sulfur heat stabilizers and hydrazine heat stabilizers. Examples of the plasticizer include, for example, phthalic acid esters, phosphoric acid esters, fatty acid esters, aliphatic dibasic acid esters, oxybenzoic acid esters, epoxy compounds and polyesters. Examples of the lubricant include, for example, fatty acid esters, fatty acids, metal soaps, fatty acid amides, higher alcohols and paraffins. Examples of the antistatic agent include, for example, cationic antistatic agents, anionic antistatic agents, nonionic antistatic agent and dipolar ion antistatic agents. Examples of the flame retardant include, for example, bromine flame retardants, phosphorus flame retardants, chlorine flame retardants, nitrogen flame retardants, aluminum flame retardants, antimony flame retardants, magnesium flame retardants, boron flame retardants and zirconium flame retardants. Examples of the filler include, for example, calcium carbonate, barium sulfate, talc, pyrophyllite and kaolin. This additive can be used alone, or in combination with two or more kinds. The component except for the fluorine resin (A) and the non-crosslinked acrylic resin (B) in fluorine matt films (F1) is preferably 10 mass% or less.

Examples of the method for compounding the additive to fluorine matt film (F1) include, for example, a method by supplying it with the raw material for forming the fluorine matt film (F1) to a forming machine to obtain a molded article and a method by kneading the raw material mixture obtained by compounding the additive to the raw material for forming the fluorine matt film (F1) by various kneading machines. Examples of the kneading machine used in the latter method include, for example, single screw extruders, twin screw extruders, Banbury mixers and roll kneading machines. Note that, if it is melt extrusion, in order to remove a nucleus or foreign material which results in print missing, or bad appearance at the time of a printing to the film, it is preferable to carry out the extrusion with filtering the resin composition constituting each layer in the melting state, for example, by a screen mesh with 200 meshes or more.

[Method for producing fluorine matt film (F1)]

Examples of the molding method for obtaining the fluorine matt film (F1) includes, for example, melting extrusion methods such as T-die method and inflation method. Among these, T-die method is preferable in terms of economic efficiency. The melting extrusion temperature is, for example, around 150 to 235°C. Also, examples of the extruder include, for example, single screw extruders and twin screw extruders.

[Fluorine matt laminated film (F2)]

The fluorine matt laminated film (F2) of the present invention is that obtained by laminating a fluorine mat resin layer (I) and the acrylic resin layer (II). The fluorine matt resin layer (I) is a layer consisting of the resin composition which is the same as the material constituting above-described fluorine matt film (F1).

[Acrylic resin layer (II)]

The acrylic resin layer (II) constituting the fluorine matt laminated film (F2) is a layer consisting of an acrylic resin composition. As this acrylic resin composition, acrylic resin compositions containing a rubber-containing polymer is preferable, and various acrylic resin compositions which are conventionally known can be used. In particular, if the fluorine matt laminated film (F2) is required to have flexibility in the building material purpose, resin compositions disclosed in JP 62-19309 B, and JP 63-8983 B are preferable. Also, if the fluorine matt laminated film (F2) is required to have an abrasion resistance, a pencil hardness, heat resistance and chemical resistance which can particularly be used for vehicles, resin compositions disclosed in JP 8-323934 A, JP 11-147237 A, JP 2002-80678 A, JP 2002-80679 A, and JP 2005-97351 A are preferable. Also, if it is required to have a molding whitening resistance in the insert molding or in-mold molding, resin compositions disclosed in JP 2004-137298 A, JP 2005-163003 A, JP 2005-139416 A, and JP 2008-106252 A are preferable.

Examples of the acrylic resin composition which is preferably used for the acrylic resin layer (II) include, for example, rubber-containing multistage polymers which contain at least a known alkyl acrylate and/or alkyl methacrylate and a graft crossing agent as a polymer constituent. Among these, rubber-containing multistage polymers which contain at least an alkyl acrylate and/or alkyl methacrylate and a graft crossing agent as a polymer constituent are preferable. Examples of the further preferred rubber-containing multistage polymer include, for example, rubber-containing multistage polymers formed by polymerization for elastomeric polymer (S) which contains at least an alkyl acrylate having an alkyl group with a carbon number of 1 to 8 and/or alkyl methacrylate having an alkyl group with a carbon number of 1 to 4 and a graft crossing agent as a polymer constituent, and by the polymerization for rigid polymer (H) which contains at least an alkyl methacrylate having an alkyl group with a carbon number of 1 to 4 as a polymer constituent, in this order. Note that, the terms of "alkyl acrylate" and "alkyl methacrylate" respectively mean alkyl ester of acrylic acid and methacrylic acid.

Elastomeric polymer (S) is, for example, a polymer which contains an alkyl acrylate having an alkyl group with a carbon number of 1 to 8 and/or alkyl methacrylate having an alkyl group with a carbon number of 1 to 4 (S1) (hereinafter, referred to as "component (S1)"), another monomer having a copolymerizable double bond (S2) (hereinafter, referred to as "component (S2)") which is used if necessary, multifunctional monomer (S3) (hereinafter, referred to as "component (S3)") which is used if necessary, and graft crossing agent (S4) (hereinafter, referred to as "component (S4)") as a polymer constituent, and is obtained by the first polymerization in the polymerization of rubber-containing multistage polymer.

The alkyl acrylate having an alkyl group with a carbon number of 1 to 8 which is component (S1) constituting elastomeric polymer (S) may be linear or branched. Examples thereof include methyl acrylate, ethyl acrylate, propyl acrylate, butyl acrylate, 2-ethylhexyl acrylate and n-octyl acrylate. This can be used alone, or in combination with two or more kinds. Among these, a compound having a low glass-transition temperature (Tg) is more preferable, and butyl acrylate is preferable. Also, the alkyl methacrylate having an alkyl group with a carbon number of 1 to 4 which is component (S1) may be linear or branched. Examples thereof include methyl methacrylate, ethyl methacrylate, propyl methacrylate and butyl methacrylate. This can be used alone, or in combination with two or more kinds.

Alkyl (meth)acrylate (S1) is preferably used in a range of 60 to 100 parts by mass with respect to 100 parts by mass of the total amount of components (S1) to (S3). Also, the kind of alkyl (meth)acrylate used for elastomeric polymer (A) is most preferably the same as that used for the following polymerization of rigid polymer. However, in each polymer of component (S) and (H), two or more kinds of alkyl (meth)acrylates may be mixed, and another kind of alkyl acrylate may be used. Note that, the term of "alkyl (meth)acrylate" means alkyl acrylate and/or alkyl methacrylate.

Component (S2) constituting elastomeric polymer (S) may be used if necessary. Examples thereof include higher alkyl acrylates having an alkyl group with a carbon number of 9 or more, lower alkoxy acrylates having an alkoxy group with a carbon number of 4 or less, alkyl acrylate monomers such as cyanoethyl acrylate, acrylamide, acrylic acid, methacrylic acid, styrene, alkylated styrene, acrylonitrile and methacrylonitrile. Component (S2) is preferably used in a range of 0 to 40 parts by mass with respect to 100 parts by mass of the total amount of components (S1) to (S3).

Multifunctional monomer (S3) constituting elastomeric polymer (S) may be used if necessary. Examples thereof include alkylene glycol dimethacrylates such as ethylene glycol dimethacrylate, 1,3-butylene glycol dimethacrylate, 1,4-butylene glycol dimethacrylate and propylene glycol dimethacrylate. Also, polyvinyl benzenes such as divinylbenzene and trivinylbenzene can be used. Also, if multifunctional monomer (S3) does not act at all, a quite stable rubber component multistage polymer is provided as long as a graft crossing agent exists. For example, it may optionally be used depending on the purpose to be added, including the case that the heat resistance is strictly required. Component (S3) is preferably used in a range of 0 to 10 mass% with respect to 100 mass% of the total amount of components (S1) to (S3).

Examples of component (S4) constituting elastomeric polymer (S) include an allyl, methallyl or crotyl ester of an $\alpha,\beta$-unsaturated carboxylic acid or dicarboxylic acid, which is copolymerizable. In particularly, an allyl ester of methacrylic acid, maleic acid or fumaric acid is preferable. Among these, allyl methacrylate particularly produces excellent advantageous effect. In addition, triallyl cyanurate and triallyl isocyanurate are also effective. The ester conjugate unsaturated bond of component (A4) is reacted to make a chemical bond much earlier than the allyl group, methallyl group or crotyl group.

The amount of component (S4) used is preferably 0.1 to 5 parts by mass with respect to 100 parts by mass of the total amount of components (S1) to (S3), and more preferably 0.5 to 2 parts by mass. The lower limits of these ranges are important in terms of the effective amount of the graft bond. Also, the upper limits of these ranges are important in terms of suitably suppressing the amount of the reaction with the polymer formed by the subsequent polymerization and in terms of suppressing the elasticity deterioration of the rubber elastomeric body.

The content of elastomeric polymer (S) in the rubber-containing multistage polymer is preferably 5 to 70 mass% and more preferably 5 to 50 mass%.

Elastomeric polymer (S) in the rubber-containing multistage polymer is obtained by divide the polymerization to two or more steps. If the polymerization is carried out in two or more steps, the composition of the monomer components for each step may be changed.

Rigid polymer (H) constituting the rubber-containing multistage polymer is a component which affects the moldability, and mechanical property of the rubber-containing multistage polymer. It is a polymer which contains alkyl methacrylate (H1) (hereinafter, referred to as "component (H1)") having an alkyl group with a carbon number of 1 to 4 and another monomer having a copolymerizable double bond (H2) (hereinafter, referred to as "component (H2)") which is used if necessary, as a constituent. It is formed by the final step of the polymerization for the rubber-containing multistage polymer.

Preferred examples of components (H1) and (H2) are respectively the same as those of components (S1) and (S2) of elastomeric polymer (S). The amount of component (H1) used is preferably 51 to 100 mass% with respect to 100 mass% of the total amount of component (H1) and component (H2).

The Tg of single rigid polymer (H) is preferably 60°C or higher and more preferably 80°C or higher. The content of the rigid polymer (H) in the rubber-containing multistage polymer is preferably 30 to 95 mass% and more preferably 40 to 70 mass%.

The preferred rubber-containing multistage polymer has elastomeric polymer (S) explained above and rigid polymer (H) as a basic structure. Also, after the polymerization for elastomeric polymer (S) and before the polymerization for rigid polymer (H), the polymerization for at least one middle polymer (M) may be carried out.

This middle polymer (M) is a polymer which contains alkyl acrylate (M1) having an alkyl group with a carbon number of 1 to 8, alkyl methacrylate (M2) having an alkyl group with a carbon number of 1 to 4, another monomer (M3) having a copolymerizable double bond which is used if necessary, multifunctional monomer (M4) which is used if necessary, and graft crossing agent (M5) which is used if necessary as a polymer constituent. The amount of the alkyl acrylate component monotonically decreases from elastomeric polymer (S) toward rigid polymer (H). Here, to monotonically decrease means that middle polymer (M) has a certain composition in the middle of the composition of elastomeric polymer (S) and the composition of rigid polymer (H) and that the composition gradually approaches from that of elastomeric polymer (S) to that of rigid polymer (H) in a continuous or step-by-step manner. In particular, the polymer having a certain composition in the middle is preferable in terms of the transparency of fluorine mat laminated film (F2) obtained.

Preferred examples of components (M1) and (M5) are respectively the same as those of components (S1) to (S4) of elastomeric polymer (S). In particular, graft crossing agent (M5) used for middle polymer (M) is preferably used in order to densely link each polymer to obtain excellent properties.

The amount of component (M1) used is preferably 10 to 90 mass% in middle polymer (M). The amount of component (M2) used is preferably 10 to 90 mass%. The amount of component (M3) used is preferably 0 to 20 mass%. The amount of component (M4) used is preferably 0 to 10 mass%. The amount of component (M5) used is preferably 0.1 to 5 mass%.

The content of middle polymer (M) in the rubber-containing multistage polymer is preferably 0 to 35 mass%.

The average particle diameter of the rubber-containing multistage polymer produced by emulsion polymerization is preferably in a range of 0.08 to 0.3 $\mu$m in view of the mechanical property and transparency of fluorine mat laminated film (F2) which contains this as a main component.

Further, preferred examples of the rubber-containing acrylic resin include following rubber component multistage polymers (R).

Preferred rubber-containing multistage polymer (R) is a rubber-containing multistage polymer formed by the polymerization for first elastomeric polymer (RA) which contains at least an alkyl acrylate having an alkyl group with a carbon number of 1 to 8 and/or an alkyl methacrylate having an alkyl group with a carbon number of 1 to 4, and a graft crossing agent, as a polymer constituent; by the polymerization for second elastomeric polymer (RB) which contains at least an alkyl acrylate having an alkyl group with a carbon number of 1 to 8 and a graft crossing agent, as a polymer constituent; by the polymerization for middle polymer (RD) which contains at least an alkyl acrylate having an alkyl group with a carbon number of 1 to 8 and/or an alkyl methacrylate having an alkyl group with a carbon number of 1 to 4, and a graft crossing agent, as a polymer constituent; and by the polymerization for rigid polymer (RC) which contains at least an alkyl methacrylate having an alkyl group with a carbon number of 1 to 4, as a polymer constituent; in this order.

First elastomeric polymer (RA) constituting rubber-containing multistage polymer (R) is, for example, a polymer which contains an alkyl acrylate having an alkyl group with a carbon number of 1 to 8 and/or alkyl methacrylate having an alkyl group with a carbon number of 1 to 4 (RA1), another monomer having a copolymerizable double bond (RA2) which is used if necessary, multifunctional monomer (RA3) which is used if necessary, and graft crossing agent (RA4) as a constituent. It is formed by the first step of the polymerization for rubber-containing multistage polymer (R). Examples of the components constituting first elastomeric polymer (RA) are the same as the components constituting elastomeric polymer (S). The content of first elastomeric polymer (RA) is preferably 5 to 35 mass% and more preferably 5 to 15 mass%. Also, it is preferably less than the content of second elastomeric polymer (RB).

Second elastomeric polymer (RB) constituting rubber-containing multistage polymer (R) is a major component for providing the rubber elasticity to rubber-containing multistage polymer (R) and examples thereof are the same as the components of elastomeric polymer (R). The Tg of single second elastomeric polymer (RB) is preferably 0°C or lower and more preferably -30°C or lower. When this Tg is 0°C or lower, it tends to have an excellent elasticity. The content of second elastomeric polymer (RB) in rubber-containing multistage polymer (R) is 10 to 45 mass%. Also, it is preferably more than the content of first elastomeric polymer (RA).

Rigid polymer (RC) constituting rubber-containing multistage polymer (R) is a component which affects the moldability, and mechanical property of rubber-containing multistage polymer (R). It is, for example, a polymer which contains alkyl methacrylate (RC1) having an alkyl group with a carbon number of 1 to 4 and another monomer having a copolymerizable double bond (RC2) which is used if necessary, as a constituent. It is formed by the final step of the polymerization for rubber-containing multistage polymer (R). Examples of components (RC1) and (RC2) are respectively the same as components (RA1) and (RA2) of first elastomeric polymer (RA). The amount of component (RC1) used is preferably 51 to 100 parts by mass. The amount of component (RC2) used is preferably 0 to 49 parts by mass. The ranges of these amount used are based on 100 parts by mass of the total of component (RC1) and (RC2).

For example, chain transfer agent (RC3) for controlling the molecular weight is added to rigid polymer (RC). The amount of component (RC3) used is preferably 0.15 to 2 parts by mass. The ranges of these amount used are based on 100 parts by mass of the total of component (RC1) and (RC2). As for the mas average molecular weight of rigid polymer (RC), the number average molecular weight measured by gel permeation chromatography is preferably 80000 or less and more preferably 70000 or less.

The Tg of single rigid polymer (RC) is preferably 60°C or higher and more preferably 80°C or higher. The content of rigid polymer (RC) in rubber-containing multistage polymer (R) is preferably 10 to 80 mass % and more preferably 40 to 60 mass%.

Examples of middle polymer (RD) constituting rubber-containing multistage polymer (R) are the same as middle polymer (M). The content of middle polymer (RD) is preferably 5 to 35 mass%. When the content is 5 mass% or more, it functions well as a middle polymer. When the content is 35 mass% or less, the balance of the final polymer becomes good.

The average particle diameter of rubber-containing multistage polymer (R) produced by emulsion polymerization is preferably in a range of 0.08 to 0.2 $\mu$m in view of the mechanical property and transparency of fluorine matt laminated film (F2).

The method for obtaining rubber-containing multistage polymer (R) by emulsion polymerization is not specifically limited. For example, preferable is a method in which the polymerization is carried out by supplying to a reactor an emulsion liquid prepared by mixing a monomer component for providing first elastomeric polymer (RA), which contains at least an alkyl acrylate having an alkyl group with a carbon number of 1 to 8 and/or an alkyl methacrylate having an alkyl group with a carbon number of 1 to 4, and a graft crossing agent, with water and a surfactant and thereafter the polymerizations are respectively carried out by supplying to the reactor monomers or monomer mixtures for providing second elastomeric polymer (RB), middle polymer (RD) and rigid polymer (RC), in this order.

As the surfactant used for preparing the emulsion liquid, an anionic, cationic or nonionic surfactant can be used. An anionic surfactant is particularly preferable.

As a polymerization initiator for the polymerization, known initiators can be used. As a method for adding it, a method by addition to either or both of the water phase and the monomer phase can be used. Preferred examples of the initiator include peroxides, azo initiators or redox initiators combining an oxidizing agent / reducing agent. Among these, redox initiators are further preferable, and sulfoxylate initiators combining ferrous sulfate / disodium ethylenediamine tetraacetate / Rongalite / hydroperoxide are particularly preferable.

The polymerization temperature is different by the kind and the quantity of the polymerization initiator used, but is preferably 40 to 120°C and more preferably 60 to 95°C.

The polymer latex containing preferred rubber-containing multistage polymer (R) obtained by the above-mentioned method can be treated using a filtering apparatus to which a filter material is attached, if necessary. Powdery rubber-containing multistage polymer (R) is collected from this latex by a method such as salting out, acid deposition coagulation, spray drying or freeze dry.

The acrylic resin layer (II) can contain, for example, a compounding agent such as a stabilizer, a lubricant, a processing auxiliary agent, a plasticizer, an impact resistance auxiliary agent, a foaming agent, a filler, a coloring agent and an ultraviolet absorber, if necessary.

In particular, in terms of the protection of the substrate, it is preferable to add an ultraviolet absorber to provide a weathering resistance. As for the kind of the ultraviolet absorber, benzotriazole ultraviolet absorbers with a molecular weight of 400 or more and triazine ultraviolet absorbers with a molecular weight of 400 or more is particularly preferable. Examples of commercialized products of the former include, for example, trade name TINUBIN 234 made by Ciba Specialty Chemicals and trade name Adekastab LA-31 made by ASAHI DENKA KOGYO. Examples of commercialized products of the latter include, for example, trade name TINUBIN 1577 made by Ciba Specialty Chemicals and trade name Adekastab LA-46 made by ASAHI DENKA KOGYO.

The amount of the ultraviolet absorber added is preferably 0.1 to 10 parts by mass with respect to 100 parts by mass of the resin constituting the acrylic resin layer (II). From the view point of weathering resistance, it is more preferably 0.5 parts by mass and particularly preferably 1 parts or more by mass. On the other hand, from the viewpoints of process smudge, solvent resistance and transparency at the time of the film formation of fluorine mat laminated film (F2), it is more preferably 5 parts or less by mass and particularly preferably 3 parts or less by mass.

In particular, a light stabilizer is preferably added to the acrylic resin layer (II). As the light stabilizer, known materials can be used, but radical scavengers such as hindered amine light stabilizers are particularly preferable. Examples of commercialized products of the light stabilizer include, for example, Adekastab LA-57, Adekastab LA-67 and Sanol LS-770 (trade names) made by ASAHI DENKA KOGYO.

The amount of the hindered amine light stabilizer added is preferably 0.1 to 5 parts by mass with respect to 100 parts by mass of the resin constituting the acrylic resin layer (II). From the viewpoint of the light resistance, it is more preferably 0.2 parts or more by mass. On the other hand, from the viewpoint of process smudge at the time of the film formation of fluorine mat laminated film (F2), it is more preferably 2 parts or less by mass and particularly preferably 1 part or less by mass.

Examples of the method for adding this compounding agent include, for example, a method by supplying it with the acrylic resin composition to an extruder for molding the acrylic resin layer (II) and a method by kneading and mixing the material mixture obtained by adding the compounding agent to the acrylic resin composition by various kneading machines. Examples of the kneading machine used in the latter method include, for example, conventional single screw extruders, twin screw extruders, Banbury mixers and roll kneading machines. Note that, if it is melt extrusion, in order to remove a nucleus or foreign material which results in print missing, or bad appearance at the time of a printing to the film, it is preferable to carry out the extrusion with filtering the resin composition constituting each layer in the melting state by a screen mesh with 200 meshes or more.

The thickness of fluorine matt laminated film (F2) is preferably 300 $\mu$m or less. If the film is used for a laminated molded article, the thickness is preferably 50 $\mu$m to 300 $\mu$m. When this thickness is 50 $\mu$m or more, sufficient deep is shown in the appearance of the molded article obtained. Also, in particular, if it is molded to a complicated configuration, enough thickness is obtained by stretching. On the other hand, when the thickness is 300 $\mu$m or less, since it comes to have a suitable rigidity, laminate character, and secondary processing character are improved. Also, at the point of mass per unit area, it becomes advantageous economically. Further, film formation character becomes stable and the production of the film becomes easy.

The layer thickness ratio of fluorine matt resin layer (I) to the acrylic resin layer (II) (hereinafter, merely referred to as "(I)/(II)") is not specifically limited. However, from the viewpoints of the solvent resistance, cost, surface hardness, transparency, mat appearance and printability of fluorine mat laminated film (F2), (I)/(II) = 1/99 to 20/80 is preferable and (I)/(II) = 2/98 to 10/90 is more preferable. Note that, as for the thickness of each layer of fluorine mat resin layer (I) and acrylic resin layer (II), the specimen obtained by cutting fluorine mat resin laminated film (F2) in a cross-section direction into 70 nm thickness is observed by a transmission electron microscope to measure the respective thicknesses at five positions, and the thickness is calculated by average them out. Examples of the commercialized transmission electron microscope include J100S (trade name) made by JEOL Ltd.

As for the surface hardness of fluorine matt laminated film (F2), the pencil hardness (JIS K5400) thereof is preferably a hardness higher than B. Further, it is more preferably HB or higher and most preferably F or higher. When the fluorine matt laminated film (F2) with a pencil hardness higher than B is used, it is hard to be damaged during the step of carrying out insert molding or in-mold molding and further the molded article comes to have good abrasion resistance. If it is used for vehicle purposes, the pencil hardness of fluorine matt laminated film (F2) is HB or higher. When the pencil hardness of fluorine matt laminated film (F2) is HB or higher, the laminated body obtained can suitably be used as a material for various vehicles such as a door waist garnish, a front control panel, a power window switch panel and an air bag cover. Further, when the pencil hardness is a hardness higher than F, the damage by abrasion with a rough-surfaced cloth such as gauze is hardly noticeable and thereby the industrial utility value o becomes higher. The surface hardness of fluorine matt laminated film (F2) may be adjusted by selecting layer thickness ratio of fluorine matt resin layer (I) and acrylic resin layer (II) or an acrylic resin composition constituting the acrylic resin layer (II).

[Method for producing fluorine matt laminated film (F2)]

As the method for producing the fluorine matt laminated film (F2) of the present invention, various methods conventionally known can be used. Examples thereof include, for example, a method by forming a layered structure of fluorine matt resin layer (I) and acrylic resin layer (II) by coextrusion molding method through a feedblock die, or a multi-manifold die , and a method by respectively molding the fluorine matt resin layer (I) and the acrylic resin layer (II) to a film state by melt extrusion method using a T-die and by laminating the two films by heat lamination method. Also, an extrusion lamination method by forming a film of fluorine matt resin layer (I) and by thereafter laminating the acrylic resin layer (II) by melt extrusion method is included. In this case, it may be produced with interchanging the fluorine matt resin layer (I) and the acrylic resin layer (II). In particular, from the viewpoints of economical efficiency and process simplification, it is preferable to form a layered structure of fluorine matt resin layer (I) and acrylic resin layer (II) by coextrusion molding method. More specifically, for example, coextrusion molding method through a feedblock die or a multi-manifold die which is described above is particularly preferable.

For example, as disclosed in JP 2002-361712 A, when a layered structure of fluorine matt resin layer (I) and acrylic resin layer (II) is formed by coextrusion molding method through a feedblock die, or a multi-manifold die , a production method with sandwiching it between a mirror surface roll and a rubber roll is also preferable. It is preferable that the side of acrylic resin layer (II) constituting the fluorine matt laminated film (F2) comes to be contacted with the mirror surface roll because the surface of the side on which of acrylic resin layer (II) are laminated has a further excellent mirror surface smoothness and thereby excellent printability can be provided. Also, it is preferable that the side of fluorine matt resin layer (I) comes to be contacted with the rubber roll. In this case, without raising the surface gloss of fluorine matt resin layer (I) (in other words, with keeping the good matt character), the mirror surface smoothness of the side of acrylic resin layer (II) side can be improved and the industrial utility value is high.

The rubber roll is not specifically limited, but a rubber roll made of silicone is preferable from the viewpoint of heat resistance. Known processing methods can be used for the finishing of the surface of the rubber roll made of silicone. However, from the viewpoint of the matching of the surface appearance of fluorine matt laminated film (F2) with the surface appearance of the laminated body which is finally obtained by an insert molding or in-mold molding, a rubber roll which produced by applying and finishing a room temperature curing silicone rubber on the outermost surface is preferable.

The fluorine matt resin layer (I) and the acrylic resin layer (II) which constitute the fluorine matt laminated film (F2) may respectively be constituted of a plurality of layers.

Also, if it is melt extrusion, in order to remove a nucleus or foreign material which results in print missing, or bad appearance at the time of a printing to the film, it is preferable to carry out the extrusion with filtering the resin composition constituting each layer in the melting state by a screen mesh with 200 meshes or more.

[Fluorine matt decorative laminated film (F3)]

The fluorine matt decorative laminated film (F3) of the present invention has a decorative layer (III) on at least one side of fluorine matt laminated film (F2). In particular, from the viewpoint of printability, it preferably has the decorative layer (III) on the side of acrylic resin layer (II).

Also, when laminating sheet (F4) or the laminated molded article described below is produced, the decorative layer (III) is preferably placed on the adhesive surface side with the thermoplastic layer (IV) or the substrate (V) from the viewpoints of protecting the decorated surface and providing high quality class.

[Decorative layer (III)]

The decorative layer (III) constituting the fluorine matt decorative laminated film (F3) can be formed by a known method. In particular, it is preferable to use as the decorative layer (III) either or both of a printed layer formed by printing method and a vapor deposition layer formed by vapor deposition method. This printed layer shows a pattern, or a letter on the surface of the laminated body obtained by an insert or in-mold molding described below. Examples of the printing pattern include, for example, patterns which consist of a wood grain, a stone grain, a fabric grain, a sand grain, a geometric pattern, a letter, a whole surface solid, or a metallic.

For the formation of the printed layer as the decorative layer (III), it is preferable to use a coloring ink which contains a binder and a pigment or dye of a suitable color. Examples of the binder include resins such as polyvinyl resins including vinyl chloride / vinyl acetate copolymers, polyamide resins, polyester resins, polyacrylic resins, polyurethane resins, polyvinyl acetal resins, polyester urethane resins, cellulose ester resins, Alkyd resins and chlorinated polyolefin resins. As the pigment, known various pigments can be used. Examples of the yellow pigment include, for example, azo pigments such as polyazo, organic pigments such as iso-indolinone, and inorganic pigments such as chrome yellow. Examples of the red pigment include azo pigments such as polyazo, organic pigments such as quinacridone, and inorganic pigments such as rouge. Examples of the blue pigment include organic pigments such as phthalocyanine blue, and inorganic pigments such as cobalt blue. Examples of the white pigments include inorganic pigments such as titanium dioxide. As the dye, known various dyes can be used.

Examples of the method for forming a printed layer include known printing methods such as offset printing method, gravure rotary printing method and screen printing, coating methods such as roll coating method and spraying coating method, and flexographic printing method. The thickness of the printed layer may appropriately be selected as necessary, and it is usually 0.5 to 30 $\mu$m. The thickness of the printed layer may appropriately be selected depending on the extension degree in the molding so that the desired surface appearance is provided in the laminated body obtained by an insert or in-mold molding described below.

The vapor deposition layer as the decorative layer (III) can be formed using, for example, at least one metal selected from the group consisting of aluminum, nickel, gold, platinum, chromium, iron, copper, indium, tin, silver, titanium, lead and zinc, or alloys or metal compounds of these. Examples of the method for forming a vapor deposition layer include vacuum deposition method, sputtering method, ion plating method and plating method. The thickness of the vapor deposition layer may appropriately be selected depending on the extension degree in the molding so that the desired surface appearance is provided in the laminated body obtained by an insert or in-mold molding described below.

[Laminating sheet (F4)]

The laminated sheet (F4) of the present invention is a sheet obtained by laminating the thermoplastic layer (IV) on a film which is selected from the group consisting of the fluorine matt film (F1), the fluorine matt laminated film (F2), and the fluorine matt decorative laminated film (F3). The thermoplastic layer (IV) may be laminated on at least one side of the film. In particular, the thermoplastic layer (IV) is preferably laminated such that it is placed on the surface of the side of acrylic resin layer (II) where the film surface has an excellent surface smoothness.

[Thermoplastic layer (IV)]

The thermoplastic layer (IV) constituting laminating sheet (F4) preferably consists of a material having a compatibility with the substrate (V) for the purpose of higher adhesiveness with the substrate (V). In particularly, a material consisting of the same material as the substrate (V) is more preferable.

Known thermoplastic resin films or seats can be used as the thermoplastic layer (IV). Examples thereof include acrylic resins, ABS resins, AS resins, chlorine resins such as polyvinyl chlorides and polyvinylidene chlorides, polyolefin resins such as polyethylenes, polypropylenes, polybutenes and polymethylpentenes, polyolefin copolymers such as ethylene - vinyl acetate copolymers or saponified materials thereof and ethylene - (meth)acrylate copolymers, polyester resins polyethylene terephthalates, polybutylene terephthalates, polyethylene naphthalates, polyarylates, polycarbonates and copolymerized esters, polyamide resins such as 6-nylon, 6,6-nylon, 6,10-nylon and 12-nylon, polystylenes, cellulose derivatives such as cellulose acetate and cellulose nitrates, fluorine resins such as polyvinyl fluorides, polyvinylidene fluorides, polytetrafluoroethylenes, ethylene - tetrafluoroethylene copolymer, or copolymers, mixtures, complexes and laminates of two kinds or three or more kinds thereof which is selected from these. Among these, acrylic resins, ABS resins, vinyl chloride resins, polyolefins, polycarbonates are preferable from the viewpoints of the formability of decorative layer (III) (the decorative layer (III) can be formed on the thermoplastic layer (IV) instead of the formation on the fluorine matt film (F1) or fluorine matt decorative film (F2)) and of the postmoldability of the laminating sheet (F4).

Compounding agents such as stabilizers, antioxidants, lubricants, processing auxiliary agents, plasticizers, impact resistance agents, foaming agents, fillers, antibacterial agents, fungicides, mold lubricants, antistatic agents, antistatic agents, ultraviolet absorbers, light stabilizer, heat stabilizer and can be compounded in the thermoplastic layer (IV), if necessary.

The thickness of thermoplastic layer (IV) may appropriately be selected as necessary. Usually, around 20 to 500 $\mu$m is preferable. The thermoplastic layer (IV) preferably has a thickness so that laminating sheet (F4) has an appearance with a complete smooth top surface and surface defects of the substrate disappear or so that decorative layer does not disappear at the time of injection molding.

Examples of the method for obtaining laminating sheet (F4) include known methods such as heat lamination, dry lamination, wet lamination and hot melt lamination. Also, the thermoplastic layer (IV) can be laminated on the fluorine matt film (F1) or the fluorine matt laminated film (F2) by extruding lamination.

Laminating sheet (F4) has a sufficient strength in the handling against an external force such as impact and transformation. For example, it is hard to generate a crack by the impact, or transformation which is incurred when the film is removed from the metal mold after vacuum formation thereof by insert molding described below , or when the vacuum formed article is mounted on the metal mold for injection molding, and the handling becomes good.

[Heat seal layer]

Heat seal layer is appropriately used for strongly bonding the fluorine mat film (F1) of the present invention, the fluorine matt laminated film (F2) or the fluorine matt decorative laminated film (F3) with the thermoplastic layer (IV). If the fluorine matt film (F1) of the present invention, the fluorine matt laminated film (F2) or the fluorine matt decorative laminated film (F3) and the thermoplastic layer (IV) have an adhesiveness, it is not necessary. However, in order to improve the strength between layers, it is preferably used. The heat sealant used in the seal layer is preferably, but should not be limited to, acryl - polyester - chlorinated vinyl acetate resin.

[Laminated molded article]

Laminated molded article of the present invention is an article obtained by laminating a film or sheet on the substrate (V), wherein the film or sheet is selected from the group consisting of the fluorine matt film (F1), the fluorine matt laminated film (F2), the fluorine matt decorative laminated film (F3), and the laminated sheet (F4). In particular, the substrate (V) is preferably laminated such that it is placed on the surface of the side of acrylic resin layer (II) where the film surface has an excellent surface smoothness.

Examples of the material constituting the substrate (V) include, for example, resins, wood boards such as wood single boards, wood plyboards, particle boards and medium density fiber boards (MDF), woody boards such as wood fiber boards, and metals such as iron and aluminum.

Examples of the resin constituting the substrate (V) include polyolefin resins such as polyethylenes, polypropylenes, polybutenes, polymethylpentenes, ethylene - propylene copolymers, ethylene - propylene - butene copolymers and olefin thermoplastic elastomers, conventional thermoplastic or thermosetting resins such as polystyrene resins, ABS resins, AS resins, acrylic resins, urethane resins, unsaturated polyester resins and epoxy resins, conventional engineering resins such as polyphenylene oxide polystyrene resins, polycarbonate resins, polyacetals, polycarbonate-modified polyphenylene ethers and polyethylene terephthalates, super engineering resins such as polysulfones, polyphenylene sulfides, polyphenylene oxides, polyetherimides, polyimides, liquid crystalline polyesters and polyallyl heat-resistant resins, and composite resin or various modified resins to which a reinforcing material such as a glass fiber or inorganic filler (talc, calcium carbonate, silica, or mica) or a modifier such as a rubber component is added.

Among these, resins which have melt adhesiveness are preferable. For example, ABS resins, AS resins, polystyrene resins, polycarbonate resins, vinyl chloride resins, acrylic resins, and polyester resins, or the resin containing this as a main component are preferable. In terms of the adhesiveness, ABS resins, AS resins, polycarbonate resins and vinyl chloride resins, or the resins containing this as a main component are preferable. In particular, ABS resins and polycarbonate resin, or the resin containing this as a main component are more desirable. Also, even if it is a resin such as a polyolefin resin which does not have melt adhesiveness, it can adhere with placing an adhesive layer at the time of molding.

As the method for producing a laminated body, known method such as heat lamination can be used when it is a laminated body having a two-dimensional configuration and when it has melt adhesiveness. The substrate which does not have melt adhesiveness, for example, which may be a wood board such as a wood single board, wood plyboard, particle board and medium density fiber board (MDF), a woody board such as a wood fiber board, or a metal such as iron and aluminum can be bonded via a adhesive layer.

In the case of a laminated body having a three-dimensional configuration, known methods such as insert molding method and in-mold molding method can be used.

The insert molding method is a method in which a film or sheet having a decoration such as printing is previously molded to a three-dimensional configuration by vacuum molding , in which the unnecessary part of the film or seat is removed by trimming processing, in which it is then transferred to a metal mold for injection molding, and in which a resin constituting a substrate is injection molded and integrated to obtain a molded article (laminated body).

The in-mold molding method is a method in which a film or sheet having a decoration such as printing is placed inside a metal mold for injection molding, in which vacuum molding is carried out, and in which a resin constituting a substrate is then injection molded and integrated in the same metal mold to obtain a molded article (laminated body).

Since the fluorine matt film (F1) of the present invention, the fluorine matt laminated film (F2), the fluorine matt decorative laminated film (F3) and laminating sheet (F4) is rich in an elongation at a high temperature, it is quite favorable in the case of providing a three dimensions configuration by vacuum forming.

The substrate (V) used for injection molding is preferably a resin which has a contraction factor which is similar to the contraction factor of fluorine mat film (F1) of the present invention, the fluorine matt laminated film (F2), the fluorine mtat decorative laminated film (F3) or laminating sheet (F4). When the contraction factors of both are similar, it is hard to generate a failure such as curve of the laminated body obtained by in-mold molding or insert molding or delamination of the film or seat.

EXAMPLE

As follows, the present invention is described by the Examples and Comparative Examples. In the following description, "part(s)" represents "part(s) by mass". Also, the evaluations of each film, seat and laminated molded article were carried out by the following methods. Note that, abbreviations in the following description represent the following.

"MMA": methyl methacrylate

"MA": methyl acrylate

"n-BA": n-butyl acrylate

"1,3-BD": 1,3-butyleneglycol dimethacrylate

"AMA": allyl methacrylate

"CHP": cumene hydroperoxide

"LPO": lauryl peroxide

"t-BH": t-butyl hydroperoxide

"EDTA": disodium ethylenediamine tetraacetate

"HEMA": 2-hydroxyethyl methacrylate

"MEK": methyl ethyl ketone

(1) Mass average particle diameter of non-crosslinked acrylic resin (B):

The mass average particle diameter of non-crosslinked acrylic resin (B) was measured using a laser diffraction scattering-type particle size distribution measuring apparatus LA-910 made by HORIBA, Ltd.

(2) Mass average particle diameter of acrylic resin compositions (2-1) and (2-2):

The mass average particle diameter of acrylic resin compositions (2-1) and (2-2) was measured by dynamic light scattering method using a light scattering photometer DLS-700 (trade name) made by Otsuka Electronics Co., Ltd.

(3) Intrinsic viscosity of non-crosslinked acrylic resin (B): The intrinsic viscosity of non-crosslinked acrylic resin (B) was measured in chloroform solvent at 25°C by AVL-2C automatic viscometer made by SUN Electronic Industries Corporation.

(4) Gel content of acrylic resin compositions (2-1) and (2-2):

Extraction treatment from a powder of acrylic resin compositions (2-1) and (2-2) in a predetermined amount (mass before extraction) was carried out in acetone solvent under reflux. The obtained treatment liquid was separated by a centrifugal separation and was dried, and then the mass of the acetone soluble portion was measured (mass after extraction). The gel content was calculated by the following equation.

$$\text{Gel content (\%)} = (\text{mass after extraction (g) / mass before extraction (g)}) \times 100$$

(5) Appearance:

A4-size fluorine matt film (F1) or the side of fluorine mat resin layer (I) was observed by visual inspection to evaluate the appearance by the following criteria.
○: There are 0 to 3 fish eyes due to bad dispersion of a non-crosslinked acrylic resin.
∆: There are 4 to 10 fish eyes due to bad dispersion of a non-crosslinked acrylic resin.
✕: There are 11 or more fish eyes due to bad dispersion of a non-crosslinked acrylic resin.

(6) 60 degree surface gloss:

According to JIS Z8741, 60 degree surface gloss of fluorine matt film (F1) or the side of fluorine matt resin layer (I) was measured using a portable glossimeter (made by KONICA MINOLTA SENSING, INC., trade name: GM-268).

(7) Matte appearance:

The fluorine matt film (F1) or the surface of fluorine matt resin layer (I) was observed by visual inspection to evaluate the matte appearance by the following criteria.
◎: It has an extremely fine matte appearance.
○: It has a fine matte appearance.
✕: It has a rough matte appearance.

(8) Average spacing (Sm) of the film surface irregularities:

Average spacing (Sm) of the film surface irregularities formed on the surface of fluorine matt film (F1) was measured at 200-fold magnification using shape measuring laser microscope VK-8500 (trade name) made by KEYENCE CORPORATION.

(9) Solvent resistance 1:

A drop of a solvent (acetone or MEK) was placed on the fluorine matt film (F1) or the surface of fluorine matt resin layer (I) and was left as it is at room temperature until it was dried. The surface of the dried specimen was observed by visual inspection to evaluate the solvent resistance by the following criteria.

○: There is no change at the surface of the specimen.

Δ: There is slight trace due to the solvent at the surface of the specimen.

×: There is distinct trace due to the solvent at the surface of the specimen, or the surface to which the solvent was contacted is in a white turbidity state.

(10) Solvent resistance 2:

A gauze was placed on the fluorine matt film (F1) or the surface of fluorine matt resin layer (I) and a drop of suntan lotion (trade name: Coppertone Waterbabies 30SPF) was placed thereon. Further, 500 g load having an aluminum plate was applied thereon and it was left as it is at 74°C for 1 hours. The surface of the tested specimen was observed by visual inspection to evaluate the solvent resistance by the following criteria.

○: There is no change at the surface of the specimen.

Δ: There is slight trace due to the solvent at the surface of the specimen.

×: There is distinct trace due to the solvent or the gauze at the surface of the specimen, or the surface to which the solvent was contacted is in a white turbidity state.

(11) Solvent resistance 3:

A drop of 10 % lactic acid aqueous solution was placed on the fluorine matt film (F1) or the surface of fluorine matt resin layer (I) and was left as it is at 80°C for 24 hours. The surface of the tested specimen was observed by visual inspection to evaluate the solvent resistance by the following criteria.

○: There is no change at the surface of the specimen.

Δ: There is slight trace due to the solvent at the surface of the specimen.

×: There is distinct trace due to the solvent at the surface of the specimen, or the surface of the film is swollen, or the surface to which the solvent was contacted is in a white turbidity state.

(12) Solvent resistance 4:

A polyethylene cylinder with an internal diameter of 38 mm and a height of 15 mm was placed on the fluorine matt film (F1) or the surface of fluorine matt resin layer (I) and was strongly glued with a specimen by a compression bonding instrument. To the opening, 5 ml of an aromatic for automobile (made by Dia Chemical Co., Ltd., grace mate poppy citrus type) was injected. After the opening was closed up with a glass plate, it was placed in a thermostatic oven whose temperature was kept at 55°C and was left as it is for 4 hours. After the test, the compression bonding instrument was dismounted. The specimen was washed with water and was then air-dried to observe the whitening condition of the test area surface.

○: There is no change at the surface of the specimen.

Δ: There is slight trace due to the solvent at the surface of the specimen. ×: There is distinct trace due to the solvent at the surface of the specimen,

or the surface to which the solvent was contacted is in a white turbidity state.

(13) Solvent resistance 5: A polyethylene cylinder with an internal diameter of 38 mm and a height of 15 mm was placed on the fluorine matt film (F1) or the surface of fluorine matt resin layer (I) and was strongly glued with a specimen by a compression bonding instrument. To the opening, 5 ml of dioctyl phthalate as a plastic plasticizer was injected. After the opening was closed up with a glass plate, it was placed in a thermostatic oven whose temperature was kept at 80°C and was left as it is for 72 hours. After the test, the compression bonding instrument was dismounted. The specimen was washed with water and was then air-dried to observe the whitening condition of the test area surface.

○: There is no change at the surface of the specimen.

Δ: There is slight trace due to the solvent at the surface of the specimen.

×: There is distinct trace due to the solvent at the surface of the specimen, or the surface to which the solvent was contacted is in a white turbidity state.

(14) Thickness of each layer of fluorine matt resin layer (I) and acrylic resin layer (II):

The specimen obtained by cutting fluorine matt resin laminated film (F2) in a cross-section direction into 70 nm thickness was observed by a transmission electron microscope (made by JEOL Ltd., trade name: J100S) to measure the respective thicknesses at five positions. The thickness was calculated by average them out.

(15) Print suitability of fluorine mat laminated film (F2):

A silver metallic pattern as a decorative layer was made on the side of acrylic resin layer (II) by gravure printing. The number of the print missing was counted and the following evaluation was carried out.
○: The number of the print missing was less than 1 piece/m$^2$.
×: The number of the print missing was 10 piece/m$^2$ or more.

(16) Surface hardness of the laminated molded article:

Using the surface of fluorine mat resin layer (I) of the laminated molded article, the surface hardness was measured according to JIS K5400.

[Preparation Example 1] (production of hydroxyl group-containing polymer (1-1) as the non-crosslinked acrylic resin (B))

Following monomer mixture (1) was supplied to a reaction container having a stirrer, a reflux condenser, and a nitrogen gas introduction port. Then, after nitrogen gas was sufficiently purged in the container, monomer mixture (1) in the container was heated up to 75°C with stirring it to carry out the reaction under nitrogen gas flow for 3 hours. After that, the temperature in the reaction container was raised up to 90°C, and it was further maintained for 45 minutes to complete the polymerization. Subsequently, a sieving operation was carried out under a condition of 150 meshes (aperture 100 $\mu$m). Passed beads were dehydrated and dried to obtain hydroxyl group-containing polymer (1-1).
Hydroxyl group-containing polymer (1-1) obtained had a SPA of 22.6 J$^{1/2}$cm$^{-3/2}$. Also, the polymer had a Tg of 77°C, an intrinsic viscosity of 0.06 L/g, an Mw/Mn of 2.1, and a mass average particle diameter of 70 $\mu$m. <monomer mixture (1)>
MA: 10 parts
MMA: 60 parts
HEMA: 30 parts
n-octyl mercaptan: 0.18 part
LPO: 1 part
Calcium phosphate: 1.8 parts
Water: 250 parts

[Preparation Example 2] (production of hydroxyl group-containing polymer (1-2) as the non-crosslinked acrylic resin (B))

Hydroxyl group-containing polymer (1-2) was obtained in the same manner as in Preparation Example 1 except that monomer mixture (1) was changed into following monomer mixture (2). Hydroxyl group-containing polymer (1-2) obtained had a SPA of 21.8 J$^{1/2}$cm$^{-3/2}$. Also, the polymer had a Tg of 93°C, an intrinsic viscosity of 0.079 L/g, an Mw/Mn of 2.1, and a mass average particle diameter of 75 $\mu$m.

<monomer mixture (2)>

MA: 1 part
MMA: 79 parts
HEMA: 20 parts
n-octyl mercaptan: 0.18 part
LPO: 1 part
Calcium phosphate: 1.8 parts
Water: 250 parts

[Preparation Example 3] (production of hydroxyl group-containing polymer (1-3) as the non-crosslinked acrylic resin (B))

Hydroxyl group-containing polymer (1-3) was obtained in the same manner as in Preparation Example 1 except that monomer mixture (1) was changed into following monomer mixture (3). Hydroxyl group-containing polymer (1-3) obtained had a SPA of 23.6 J$^{1/2}$cm$^{-3/2}$. Also, the polymer had a Tg of 80°C, an intrinsic viscosity of 0.041 L/g, an Mw/Mn of 2.2, and a mass average particle diameter of 75 $\mu$m.

<monomer mixture (3)>

MA: 1 part
MMA: 54 parts
HEMA: 45 parts
n-octyl mercaptan: 0.18 part
LPO: 1 part
Calcium phosphate: 1.8 parts
Water: 250 parts

[Preparation Example 4] (production of hydroxyl group-containing polymer (1-4) as the non-crosslinked acrylic resin (B))

Following monomer mixture (4) was supplied to a reaction container having a stirrer, a reflux condenser, and a nitrogen gas introduction port. Then, after nitrogen gas was sufficiently purged in the container, monomer mixture (1) in the container was heated up to 80°C with stirring it. Hydroxyl group-containing polymer (1-4) was obtained in the same manner as in Preparation Example 1 except these. Hydroxyl group-containing polymer (1-4) obtained had a SPA of 22.6 $J^{1/2}cm^{-3/2}$. Also, the polymer had a Tg of 77°C, an intrinsic viscosity of 0.07 L/g, an Mw/Mn of 2.5, and a mass average particle diameter of 75 $\mu$m.

<monomer mixture (4)>

MA: 10 parts
MMA: 60 parts
HEMA: 30 parts
n-octyl mercaptan: 0.15 part
LPO: 1 part
Calcium phosphate: 1.8 parts
Water: 250 parts

[Preparation Example 5] (production of hydroxyl group-containing polymer (1-5) as the non-crosslinked acrylic resin (B))

Hydroxyl group-containing polymer (1-5) was obtained in the same manner as in Preparation Example 1 except that monomer mixture (1) was changed into following monomer mixture (5). Hydroxyl group-containing polymer (1-5) obtained had a SPA of 22.6 $J^{1/2}cm^{-3/2}$. Also, the polymer had a Tg of 77°C, an intrinsic viscosity of 0.13 L/g, an Mw/Mn of 2.2, and a mass average particle diameter of 75 $\mu$m.

<monomer mixture (5)>

MA: 10 part
MMA: 60 parts
HEMA: 30 parts
n-octyl mercaptan: 0.08 part
LPO: 1 part
Calcium phosphate: 1.8 parts
Water: 250 parts

[Preparation Example 6] (production of hydroxyl group-containing polymer (1-6) as the non-crosslinked acrylic resin (B))

Hydroxyl group-containing polymer (1-6) was obtained in the same manner as in Preparation Example 1 except that monomer mixture (1) was changed into following monomer mixture (6). Hydroxyl group-containing polymer (1-6) obtained had a SPA of 24.1 $J^{1/2}cm^{-3/2}$. Also, the polymer had a Tg of 68°C, an intrinsic viscosity of 0.04 L/g, an Mw/Mn of 2.2, and a mass average particle diameter of 75 $\mu$m.

<monomer mixture (6)>

MA: 10 parts
MMA: 40 parts
HEMA: 50 parts
n-octyl mercaptan: 0.18 part
LPO: 1 part
Calcium phosphate: 1.8 parts
Water: 250 parts

[Preparation Example 7] (production of acrylic resin composition (2-1) as the acrylic resin layer (II))

<rubber-containing polymer (a)>

8.5 parts of deionized water was supplied to a container having a stirrer. After that, monomer mixture (a-A-1) shown below with 0.025 part of CHP was supplied, and it was stirred and mixed at room temperature. Then, 1.3 parts of an emulsifier (made by TOHO Chemical Industry Co., Ltd., trade name: PHOSPHANOL RS610NA) were supplied to the above-mentioned container with stirring, and the stirring was continued for 20 minutes to prepare an emulsion.

(a-A-1)

MMA: 0.3 part
n-BA: 4.5 parts
1,3-BD: 0.2 part
AMA: 0.05 part

Next, 186.5 parts of deionized water was supplied to a polymerization container having a condenser, and the temperature was raised up to 70°C. Further, a mixture, which was prepared by adding 0.20 part of sodium formaldehyde sulfoxylate, 0.0001 part of ferrous sulfate and 0.0003 part of EDTA to 5 parts of ion-exchange water, was supplied to the polymerization container at one time. Then, the emulsion prepared was dropped to the polymerization container over 8 minutes with stirring under nitrogen, and the reaction was continued for 15 minutes to finalize a first step polymerization of monomer mixture (a-A).

Subsequently, monomer mixture (a-A-2) shown below with 0.016 part of CHP was dropped to the polymerization container over 90 minutes, and the reaction was continued for 60 minutes to finalize a second step polymerization of monomer mixture (a-A).

(a-A-2)

MMA: 1.5 parts
n-BA: 22.5 parts
1,3-BD: 1.0 part
AMA: 0.25 part

The Tg calculated by the FOX equation with respect to monomer mixture (a-A-1) used for the first step polymerization was -48°C, and the Tg calculated by the FOX equation with respect to monomer mixture (a-A-2) used for the second step polymerization was -48°C.

Subsequently, monomer mixture (a-B) shown below with 0.0125 part of CHP was dropped to the polymerization container over 45 minutes, and the reaction was continued for 60 minutes. The Tg calculated by the FOX equation of the polymer obtained from monomer mixture (a-B) was 20°C.

(a-B)

MMA: 6 parts

n-BA: 4 parts

AMA: 0.075 part

Subsequently, monomer mixture (a-C) shown below with 0.19 part of n-OM and 0.08 part of t-BH was dropped to the polymerization container over 140 minutes, and the reaction was continued for 60 minutes to obtain a polymer latex of rubber component polymer (a).

(a-C)

MMA: 55.2 parts

MA: 4.8 parts

The Tg calculated by the FOX equation with respect to monomer mixture (a-C) was 84°C. Also, the mass average particle diameter of rubber-containing polymer (a) which was measured after the polymerization was 0.12 $\mu$m.
The polymer latex of rubber component polymer (a) was filtered using a vibration type filtering apparatus to which a mesh made of SUS (average aperture: 62 $\mu$m) was attached. After that, it was salted out in an aqueous solution including 3.5 parts of calcium acetate. It was washed with water, collected and dried to obtain powdery rubber-containing polymer (a). The gel content of rubber-containing polymer (a) was 60 mass%.
100 parts of rubber-containing polymer (a) obtained by the above-mentioned procedure as well as 1.4 parts of a UV absorber (made by Ciba Specialty Chemicals, trade name: TINUBIN 234), 0.1 part of an antioxidant (made by ASAHI DENKA KOGYO, trade name: Adekastab AO-50) and 0.3 part of a light stabilizer (made by ASAHI DENKA KOGYO, trade name LA-67) as a compounding agent were mixed using a Henschel mixer. This mixture was supplied to a degassing type extruder (made by Ikegai Co., Ltd, trade name: PCM-30) which was heated to 230°C, and it was kneaded. It was extruded with removing a foreign material using a screen mesh of 300 meshes and was pelletized to obtain acrylic resin composition (2-1) constituting the acrylic resin layer (II).

[Preparation Example 8] (production of acrylic resin composition (2-2) as the acrylic resin layer (II))

<rubber-containing polymer (b)>

An emulsion was prepared in the same manner as in Preparation Example 7 except that the amount of the deionized water previously supplied to the container was changed into 10.8 parts. Then, a first step polymerization of monomer mixture (b-A) was finalized in the same manner as the first step polymerization of monomer mixture (a-A) in Preparation Example 7 except that the amount of the deionized water supplied was changed into 139.2 parts and that the temperature raised was changed into 75°C.
Subsequently, a second step polymerization of monomer mixture (b-A) was finalized in the same manner as the second step polymerization of monomer mixture (a-A) in Preparation Example 7 except that monomer component (b-A-2) shown below was used instead of monomer component (a-A-2).

(b-A-2)

MMA: 9.6 parts
n-BA: 14.4 parts
1,3-BD: 1.0 part
AMA: 0.25 part

The Tg calculated by the FOX equation with respect to monomer mixture (b-A-1) used for the first step polymerization was -48°C, and the Tg calculated by the FOX equation with respect to monomer mixture (b-A-2) used for the second step polymerization was -10°C.
Subsequently, a polymerization was carried out in the same manner as the polymerization of monomer mixture (a-B) in Preparation Example 7 except that monomer mixture (b-B) shown below was used instead of monomer mixture (a-B).

(b-B)

    MMA: 6 parts
    MA: 4 parts
    AMA: 0.075 part

The Tg calculated by the FOX equation of the polymer with respect to monomer mixture (b-B) was 60°C.
Subsequently, a polymerization was carried out in the same manner as the polymerization of monomer mixture (a-C) in Preparation Example 7 except that monomer mixture (b-C) shown below was used instead of monomer mixture (a-C) and the amount of n-OM was changed into 0.264 part, and a polymer latex of rubber component polymer (b) was obtained.

(b-C)

    MMA: 57 parts
    MA: 3 parts

The Tg calculated by the FOX equation with respect to monomer mixture (b-C) was 99°C. Also, the mass average particle diameter of rubber-containing polymer (b) which was measured after the polymerization was 0.11 $\mu$m.
The polymer latex of rubber component polymer (b) was filtered - collected, and dried in the same manner as in Preparation Example 7 to obtain powdery rubber-containing polymer (b). The gel content of rubber-containing polymer (b) was 70 mass%.
And, each additive was mixed in the same manner as in Preparation Example 7 except that 45 parts of rubber containing polymer (b) and 55 parts of a thermoplastic polymer [MMA/MA copolymer (MMA/MA = 99/1 (mass ratio), reduced viscosity $\eta$sp/c = 0.06 L/g)] were used instead of 100 parts of rubber containing polymer (a). It was extruded with removing a foreign material using a screen mesh of 300 meshes and was pelletized to obtain acrylic resin composition (2-2) constituting the acrylic resin layer (II).

<Examples 1 to 9 and Comparative Examples 1 to 6>

The non-crosslinked acrylic resin (B) shown in Table 1 was compounded in the ratio shown in Table 1 with respect to 100 parts of a polyvinylidene fluoride (made by Arkema K. K., trade name: KYNAR720, solubility parameter (SPF): 17.1 $J^{1/2}cm^{-3/2}$) as the fluorine resin (A), and it was mixed using a Henschel mixer for 30 seconds. It was extruded using a twin screw extruder (made by TOSHIBA MACHINE CO., LTD, trade name TEM35) under the conditions of the cylinder temperature of 180 to 200°C and the die head temperature of 220°C with removing a foreign material using a screen mesh of 300 meshes, and it was pelletized by cutting it.
After the pellet obtained was dried, a film was then made using a 40 $\phi$ film forming machine (made by Musashino Kikai Co., Ltd.) with removing a foreign material using a screen mesh of 300 meshes to obtain fluorine film (F1) having a thickness of approximately 50 $\mu$m. Note that, when the film was made, the cylinder temperature was set to 180 to 220°C and the T-die temperature was set to 230°C. The evaluation results as regards 60 degree surface gloss, matte appearance, appearance, Sm and solvent resistance are shown in Table 1.

[Table 1]

| | Fluorine Resin (A) Kind | Fluorine Resin (A) Compounding Amount (parts) | Acrylic Resin (B) Kind | Acrylic Resin (B) Δσ | Acrylic Resin (B) Compounding Amount (parts) | SPF | Appearance | 60 degree Surface Gloss (%) | Matte Appearance | Sm (μm) | Solvent Resistance 1 Acetone | Solvent Resistance 1 MEK | Solvent Resistance 2 | Solvent Resistance 3 | Solvent Resistance 4 | Solvent Resistance 5 |
|---|---|---|---|---|---|---|---|---|---|---|---|---|---|---|---|---|
| Ex. 1 | (1) | 100 | Hydroxyl Group-Containing Polymer (1-1) | 5.5 | 2 | 17.3 | O | 49 | O | 31 | O | O | O | △ | O | O |
| Ex. 2 | (1) | 100 | Hydroxyl Group-Containing Polymer (1-1) | 5.5 | 5 | 17.4 | O | 25 | ◎ | 30 | O | O | O | △ | O | O |
| Ex. 3 | (1) | 100 | Hydroxyl Group-Containing Polymer (1-1) | 5.5 | 7 | 17.5 | O | 16 | ◎ | 28 | O | O | O | △ | O | O |
| Ex. 4 | (1) | 100 | Hydroxyl Group-Containing Polymer (1-1) | 5.5 | 10 | 17.6 | O | 12 | ◎ | 26 | O | O | O | △ | O | O |
| Ex. 5 | (1) | 100 | Hydroxyl Group-Containing Polymer (1-1) | 5.5 | 15 | 17.9 | O | 12 | ◎ | 28 | O | O | O | △ | O | O |
| Ex. 6 | (1) | 100 | Hydroxyl Group-Containing Polymer (1-3) | 6.5 | 7 | 17.6 | △ | 25 | ◎ | 30 | O | O | O | △ | O | O |
| Ex. 7 | (1) | 100 | Hydroxyl Group-Containing Polymer (1-4) | 5.5 | 7 | 17.5 | △ | 23 | ◎ | 30 | O | O | O | △ | O | O |
| Ex. 8 | (1) | 100 | Hydroxyl Group-Containing Polymer (1-5) | 5.5 | 7 | 17.5 | △ | 25 | ◎ | 30 | O | O | O | △ | O | O |
| Ex. 9 | (1) | 100 | Hydroxyl Group-Containing Polymer (1-6) | 7 | 7 | 17.6 | × | 26 | O | 32 | O | O | O | △ | O | O |
| Comp. Ex. 1 | (1) | 100 | — | — | — | — | O | 92 | × | — | O | O | O | △ | O | O |
| Comp. Ex. 2 | (1) | 100 | Thermoplastic Polymer | 3.2 | 10 | 17.6 | O | 138 | × | — | △ | △ | △ | △ | △ | △ |
| Comp. Ex. 3 | (1) | 100 | Hydroxyl Group-Containing Polymer (1-1) | 5.5 | 20 | 18.1 | O | 11 | ◎ | 25 | △ | △ | △ | × | △ | △ |
| Comp. Ex. 4 | (1) | 100 | Hydroxyl Group-Containing Polymer (1-2) | 4.7 | 10 | 17.6 | × | 41 | × | 35 | O | O | O | △ | O | O |
| Comp. Ex. 5 | (1) | 100 | Crosslinked Acrylic Fine Particle A | — | 5 | — | O | 21 | × | 50 | × | × | × | × | × | × |
| Comp. Ex. 6 | (1) | 100 | Crosslinked Acrylic Fine Particle B | — | 5 | — | O | 20 | × | 35 | × | × | × | × | × | × |

The abbreviated codes and abbreviated expressions in the table are as follows.
"(1)" of the fluorine resin (A): polyvinylidene fluoride (made by Arkema K. K., trade name: KYNAR720)
"crosslinked acrylic fine particle A": EPOSTAR MA1013 (made by NIPPON SHOKUBAI CO., LTD.)
"crosslinked acrylic fine particle B": EPOSTAR MA1006 (made by NIPPON SHOKUBAI CO., LTD.)
"thermoplastic polymer" methyl methacrylate (MMA) - methyl acrylate (MA) copolymer (MMA/MA = 99/1 (mass ratio), reduced viscosity $\eta sp/c = 0.06$ L/g, solubility parameter: $20.3\ J^{1/2}cm^{-3/2}$)
"Δσ": SPA - SPF ($J^{1/2}cm^{-3/2}$)

From the above-mentioned Examples and Comparative Examples, the followings become clear.

In fluorine films (F1) in Examples 1 to 9, fluorine matt films which have a solvent resistance inherent in fluorine resins as well as a good fine matte appearance were obtained. [0190]

On the other hand, fluorine film (F1) obtained in Comparative Example 1 was made from only fluorine resin (A) and did not have irregularities of the film surface. Also, in Comparative Examples 2 and 4, the difference $\Delta\sigma$ between the solubility parameters of fluorine resin (A) and non-crosslinked acrylic resin (B) was less than 5 $J^{1/2}cm^{-3/2}$. As a result, in Comparative Example 2, matte appearance was insufficient. Also, in Comparative Example 4, fish eyes were generated, and a matt film having a good appearance was not obtained. In Comparative Example 3, although a matt film having a good appearance was obtained, the solvent resistance inherent in fluorine resins was deteriorated because there was too much quantity of non-crosslinked acrylic resin (B). Also, in Comparative Examples 5 and 6 in which a cross-linked acrylic fine particle was compounded to the fluorine resin (A), the fluorine films obtained had a rough matting condition and the solvent resistances were also deteriorated.

<Example 10>

The pellet of the fluorine resin composition obtained in Example 2 constituting the fluorine matt resin layer (I) and the pellet of acrylic resin composition (2-1) obtained in Preparation Example 7 constituting the acrylic resin layer (II) were dried at 80°C all day and night. Acrylic resin composition (2-1) was plasticized using a non-bent screw type extruder with 65 mmφ having a screen mesh of 500 meshes in which the cylinder temperature was set to 240°C. On the other hand, the above-mentioned fluorine resin composition was also plasticized using an extruder with 25 mmφ having a screening mesh of 500 meshes in which the cylinder temperature was set to 180 to 220°C. Then, the fluorine matt laminated film (F2) having a thickness of 50 μm was produced by a multi-manifold die for 2 kinds and 2 layers at 240°C in which the side of acrylic resin layer (II) was contacted with a mirror surface cooling roller.

From the observation of the cross-section of fluorine matt laminated film (F2), the thickness of fluorine matt resin layer (I) was 5 μm, and the thickness of acrylic resin layer (II) was 45 μm.

On the other hand, a film (made by RIKEN TECHNOS CORP., trade name: Rivest TPO) having a thickness of 90 μm, which includes a random polymerized polypropylene resin with a hindered phenolic antioxidant, UV absorber, hindered amine light stabilizer and iron oxide (pigment), was used as the thermoplastic layer (IV). A pattern as the decorative layer (III) was printed on the surface of this thermoplastic layer (IV) by gravure printing method using an ink whose binder resin consisted of an acrylic resin and a vinyl chloride acetate resin and whose pigment consisted of at least 1 or more from isoindoline, diketo pyrrolo pyrrole, carbon black and phthalocyanine blue. This decorative layer (III) was placed such that it was contacted with the side of acrylic resin layer (II) of fluorine matt laminated film (F2), and heat lamination was carried out to obtain laminating sheet (F4).

<Example 11 >

The fluorine matt laminated film (F2) and laminating sheet (F4) were obtained in the same manner as in Example 10 except that the pellet of the fluorine resin composition obtained in Example 4 was used instead of the pellet of the fluorine resin composition obtained in Example 2.

<Example 12>

The fluorine matt laminated film (F2) was obtained in the same manner as in Example 10 except that acrylic resin layer (2-2) obtained in Preparation Example 8 was used instead of acrylic resin layer (2-1) obtained in Preparation Example 7 and that the thickness of the fluorine matt laminated film was changed into 125 μm.

From the observation of the cross-section of fluorine matt laminated film (F2), the thickness of fluorine matt resin layer (I) was 5 μm, and the thickness of acrylic resin layer (II) was 120 μm.

A silver metallic pattern as the decorative layer (III) was made on the side of acrylic resin layer (II) of fluorine matt laminated film (F2) by gravure printing method to obtain the fluorine matt decorative laminated film (F3). The evaluation of the print suitability was "O".

Further, an ABS sheet as the thermoplastic layer (IV) having a thickness of 0.35 mm which had an adhesive layer was laminated by heat lamination such that the adhesive layer was contact with the silver metallic decorative layer, to obtain laminating sheet (F4). Molding was carried out using this laminating sheet (F4). Concretely, this laminating sheet (F4) was placed on the inside of a metal mold having a vacuuming function such that the side of fluorine mat laminated film (F2) was placed toward the cavity side. After the temperature of laminating sheet (F4) was heated up to 190°C by a heater, vacuum molding was carried out.

The unnecessary part (the part which does not adhere to the substrate (V) in the final laminated body) of laminating sheet (F4) vacuum molded was trimmed from the side of fluorine matt laminated film (F2) using a Thompson clicker die.

Laminating sheet (F4) after trimming the unnecessary part was placed on the bottom of the metal mold which has a concave part of 1 cm$^2$ with a depth of 1 mm at the bottom of the metal mold of the cavity side as well as at the position of 3 cm in lateral direction from the center gate, such that the side of fluorine matt laminated film (F2) of laminating sheet (F4) was located in the cavity side. Then, an ABS resin (made by UMG ABS, Ltd., trade name: DIAPETABS BULKSAM TM25) which became the substrate (V) was injection molded on the thermoplastic layer (IV) of laminating sheet (F4) to obtain a laminated body (laminated molded article) by insert molding.

The configuration of the laminated body is a cube of 150 mm long $\times$ 120 mm wide $\times$ 2 mm thickness and with a depth of 10 mm. As for the gate location of the metal mold, there are 3 parts in total, one of which is at the center of the laminated body, and the others of which are respectively at the position of 40 mm in upper and lower direction (in longitudinal direction of the laminated body) from the center gate. The shape of the gate is a pin point gate with a diameter of 1 mm. Also, the corner R of the corner which links the bottom and the side surfaces of the cavity side of the metal mold is approximately 3. The corner R was measured by RADIUS GAGE (trade name) made by FUJI TOOL. This injection molding was carried out under the conditions of the cylinder temperature of 250°C, the injection speed of 30 %, the injection pressure of 43 % and the mold temperature 60°C using J85ELII type injection molding machine (trade name) made by Japan Steel Works, LTD. Various evaluations of this laminated molded article were carried out. The results are shown in Table 2.

<Example 13>

The fluorine matt laminated film (F2) was obtained in the same manner as in Example 12 except that the pellet of the fluorine resin composition obtained in Example 4 was used as the fluorine mtat resin layer (I) instead of the pellet of the fluorine resin composition obtained in Example 2. And, the fluorine matt decorative laminated film (F3), laminating sheet (F4) and a laminated molded article were produced and evaluated in the same manner as in Example 12 except that this fluorine matt laminated film (F2) was used. The results are shown in Table 2.

<Examples 14 to 15>

Laminated molded articles were produced and evaluated in the same manner as in Example 12 except that the layer thicknesses of fluorine matt resin layer (I) and acrylic resin layer (II), and the layer thickness ratio [(I)/(II)] were changed into those shown in Table 2. The results are shown in Table 2.

<Comparative Examples 7 to 10>

Fluorine matt laminated films were obtained in the same manner as in Example 12 except that the pellets of the fluorine resin compositions obtained in Comparative Examples 3 to 6 were used as the fluorine matt resin layer (I) instead of the pellet of the fluorine resin composition obtained in Example 2, as shown in Table 2. And, fluorine matt decorative laminated films, laminating sheets and laminated molded articles were produced and evaluated in the same manner as in Example 12 except that these fluorine matt laminated films were used. The results are shown in Table 2.

In Comparative Example 7, although a film having a good matte appearance was obtained, the solvent resistance inherent in fluorine resins was deteriorated because there was too much quantity of non-crosslinked acrylic resin (B). In Comparative Example 8, since the difference $\Delta\sigma$ between the solubility parameters of fluorine resin (A) and non-crosslinked acrylic resin (B) was less than 5 J$^{1/2}$cm$^{-3/2}$, matte appearance was insufficient and fish eyes were also generated, and a matt film having a good appearance was not obtained. Also, in Comparative Examples 9 and 10 in which a cross-linked acrylic fine particle was compounded to the fluorine resin (A), the fluorine films obtained had a rough matte appearance and the solvent resistances were also deteriorated.

[Table 2]

EP 2 530 118 B1

Table 2

| | Fluorine Mat Laminated Film (F2) | | | | | | Laminated Molded Article | | | | | | | | | |
| | Fluorine Mat Resin Layer ( I ) | | | Acrylic Resin Layer ( II ) | | Layer Thickness Ratio ( I )/( II ) | Surface Hardness | Appearance | 60 degree Surface Gloss (%) | Matte Appearance | Solvent Resistance 1 | | Solvent Resistance 2 | Solvent Resistance 3 | Solvent Resistance 4 | Solvent Resistance 5 |
| | Kind | Layer Thickness (μm) | Δσ | Kind | Layer Thickness (μm) | | | | | | Acetone | MEK | | | | |
| Ex. 12 | Ex. 2 | 5 | 5.5 | Acrylic Resin Composition (2-2) | 120 | 4/96 | H | O | 28 | ◎ | O | O | O | Δ | O | O |
| Ex. 13 | Ex. 4 | 5 | 5.5 | Acrylic Resin Composition (2-2) | 120 | 4/96 | H | O | 15 | ◎ | O | O | O | Δ | O | O |
| Ex. 14 | Ex. 2 | 12 | 5.5 | Acrylic Resin Composition (2-2) | 113 | 10/90 | F | O | 25 | ◎ | O | O | O | Δ | O | O |
| Ex. 15 | Ex. 2 | 37 | 5.5 | Acrylic Resin Composition (2-2) | 88 | 30/70 | 2B | O | 22 | ◎ | O | O | O | Δ | O | O |
| Comp. Ex. 7 | Comp. Ex. 3 | 5 | 5.5 | Acrylic Resin Composition (2-2) | 120 | 4/96 | H | O | 13 | ◎ | Δ | Δ | Δ | × | Δ | Δ |
| Comp. Ex. 8 | Comp. Ex. 4 | 5 | 4.7 | Acrylic Resin Composition (2-2) | 120 | 4/96 | H | × | 43 | × | O | O | O | Δ | O | O |
| Comp. Ex. 9 | Comp. Ex. 5 | 5 | — | Acrylic Resin Composition (2-2) | 120 | 4/96 | H | Δ | 22 | × | × | × | × | × | × | × |
| Comp. Ex. 10 | Comp. Ex. 6 | 5 | — | Acrylic Resin Composition (2-2) | 120 | 4/96 | H | Δ | 22 | × | × | × | × | × | × | × |

INDUSTRIAL APPLICABILITY

The fluorine matt film (F1), the fluorine matt laminated film (F2), the fluorine matt decorative laminated film (F3), laminating sheet (F4) and the laminated molded article of the present invention are specifically suitable for the vehicle purposes and the building material purposes. More specifically, it can suitably be used for the automobile interior purposes such as instrument panels, console boxes, meter covers, door lock bezels, steering wheels, power window electric switch bases, center clusters and dashboards; for the automobile exterior purposes such as weather strips, bumpers, bumper guards, side mud guards, body panels, spoilers, front grills, strut mounts, wheel caps, center pillars, door mirrors, center ornaments, side moles, door moles and window moles , windows, head lamp covers, tail lamp covers and windshield components; for the purposes such as front panels, buttons, emblems and surface dressed materials of AV equipments and furniture products; for the purposes such as housings, display windows and buttons of mobile phones ; as well as for the exterior purposes for furniture; for the building interior purposes such as wall surfaces, ceilings and floors; for the building exterior purposes for such as external walls including sidings, fences, roofs, gates and bargeboards; for the furniture surface dressed material purposes such as window frames, doors, handrails, thresholds and lintels; for the optical component purposes such as various displays, lenses, mirrors, goggles and windowpanes; or for the interior or exterior purposes of the various vehicles except for automobiles such as trains, aircrafts and ships, and for the other various purposes for various packages and materials of bottles, cosmetic containers, accessory cases , and miscellaneous goods such as free gifts and small articles.

## Claims

1.  A fluorine matt film (F1) which comprises

    100 parts by mass of a fluorine resin (A) and
    1 to 18 parts by mass (with respect to 100 parts by mass of the fluorine resin (A)) of a non-crosslinked acrylic resin (B),

    wherein the solubility parameter (SPF) of fluorine resin (A) and the solubility parameter (SPA) of non-crosslinked acrylic resin (B) satisfy the following equations (1) and 2, and
    wherein the non-crosslinked acrylic resin (B) is a hydroxyl group-containing polymer, which is a polymer obtained by copolymerizing a monomer component which contains 1 to 80 mass% of a hydroxyalkyl (meth)acrylate having a hydroxyl group-containing alkyl group with a carbon number of 1 to 8, 20 to 99 mass% of alkyl methacrylate having an alkyl group with a carbon number of 1 to 13, and 0 to 79 mass% of alkyl acrylate having an alkyl group with a carbon number of 1 to 8.

$$\mathrm{SPA} - \mathrm{SPF} \geq 5 \ \mathrm{J}^{1/2} \ \mathrm{cm}^{-3/2} \qquad (1)$$

$$\mathrm{SPA} - \mathrm{SPF} \leq 6.8 \ \mathrm{J}^{1/2} \ \mathrm{cm}^{-3/2} \quad (2)$$

2.  The fluorine matt film (F1) according to claim 1, wherein the solubility parameter (SPFA) of fluorine matt film (F1) is 17 to 18 $\mathrm{J}^{1/2} \ \mathrm{cm}^{-3/2}$.

3.  The fluorine matt film (F1) according to claim 1 wherein the fluorine resin (A) is vinylidene fluoride polymer.

4.  A method for producing the fluorine matt film (F1) according to claim 1, comprising a molding step by a T-die method.

5.  A fluorine matt laminated film (F2) obtained by laminating an acrylic resin layer (II) on a fluorine matt resin layer (I) which comprises

    100 parts by mass of fluorine resin (A) and
    1 to 18 parts by mass (with respect to 100 parts by mass of the fluorine resin (A)) of non-crosslinked acrylic resin (B), and

    wherein the solubility parameter (SPF) of fluorine resin (A) and the solubility parameter (SPA) of non-crosslinked acrylic resin (B) satisfy the following equations (1) and (2), and
    wherein the non-crosslinked acrylic resin (B) is a hydroxyl group-containing polymer, which is a polymer obtained by copolymerizing a monomer component which contains 1 to 80 mass% of a hydroxyalkyl (meth)acrylate having a hydroxyl group-containing alkyl group with a carbon number of 1 to 8, 20 to 99 mass% of alkyl methacrylate having an alkyl group with a carbon number of 1 to 13, and 0 to 79 mass% of alkyl acrylate having an alkyl group with a carbon number of 1 to 8 .

$$SPA - SPF \geq 5\ J^{1/2}\ cm^{-3/2} \qquad (1)$$

$$SPA - SPF \leq 6.8\ J^{1/2}\ cm^{-3/2} \qquad (2)$$

6. A method for producing the fluorine matt laminated film (F2) according to claim 5, comprising a molding step in which the fluorine matt resin layer (I) and the acrylic resin layer (II) are coextruded.

7. A fluorine matt decorative laminated film (F3) which further comprises a decorative layer (III) on at least one side of fluorine matt laminated film (F2) according to claim 5.

8. A laminated sheet (F4) obtained by laminating a thermoplastic layer (IV) on a film which is selected from the group consisting of the fluorine matt film (F1) according to claim 1, the fluorine matt laminated film (F2) according to claim 5, and the fluorine matt decorative laminated film (F3) according to claim 7.

9. A laminated molded article obtained by laminating a film or sheet on a substrate (V), wherein the film or sheet is selected from the group consisting of the fluorine matt film (F1) according to claim 1, the fluorine matt laminated film (F2) according to claim 5, the fluorine matt decorative laminated film (F3) according to claim 7, and the laminated sheet (F4) according to claim 8.

**Patentansprüche**

1. Fluor-Mattfolie (F1), welche umfasst

   100 Masseteile eines Fluorharzes (A) und
   1 bis 18 Masseteile (bezüglich 100 Masseteile des Fluorharzes (A)) eines nichtvernetzten Acrylharzes (B),

   wobei der Löslichkeitsparameter (SPF) von Fluorharz (A) und der Löslichkeitsparameter (SPA) von nichtvernetztem Acrylharz (B) die folgenden Gleichungen (1) und (2) erfüllen, und
   wobei das nichtvernetzte Acrylharz (B) ein hydroxylgruppenhaltiges Polymer ist, das ein Polymer ist, erhalten durch Copolymerisieren einer Monomerkomponente, welche 1 bis 80 Masse-% eines Hydroxylalkyl(meth)acrylats mit einer hydroxylgruppenhaltigen Alkylgruppe mit einer Kohlenstoffanzahl von 1 bis 8, 20 bis 99 Masse-% Alkylmethacrylat mit einer Alkylgruppe mit einer Kohlenstoffanzahl von 1 bis 13 und 0 bis 79 Masse-% Alkylacrylat mit einer Alkylgruppe mit einer Kohlenstoffanzahl von 1 bis 8, enthält.

$$SPA - SPF \geq 5\ J^{1/2}\ cm^{-3/2} \qquad (1)$$

$$SPA - SPF \leq 6,8\ J^{1/2}\ cm^{-3/2} \qquad (2)$$

2. Fluor-Mattfolie (F1) nach Anspruch 1, wobei der Löslichkeitsparameter (SPFA) der Fluor-Mattfolie (F1) 17 bis 18 $J^{1/2}\ cm^{-3/2}$ beträgt.

3. Fluor-Mattfolie (F1) nach Anspruch 1, wobei das Fluorharz (A) Vinylidenfluoridpolymer ist.

4. Verfahren zur Herstellung der Fluor-Mattfolie (F1) nach Anspruch 1, umfassend einen Formgebungsschritt durch ein T-Werkzeug-Verfahren.

5. Laminierte Fluor-Mattfolie (F2), erhalten durch Laminieren einer Acrylharzschicht (II) auf eine Fluor-Mattharzschicht (I), welche umfasst

100 Masseteile Fluorharz (A) und

1 bis 18 Masseteile (bezüglich 100 Masseteile des Fluorharzes (A)) nicht vernetztes Acrylharz (B), und

wobei der Löslichkeitsparameter (SPF) von Fluorharz (A) und der Löslichkeitsparameter (SPA) von nicht vernetztem Acrylharz (B) die folgenden Gleichungen (1) und (2) genügen, und wobei das nichtvernetzte Acrylharz (B) ein hydroxylgruppenhaltiges Polymer ist, das ein Polymer ist, erhalten durch Copolymerisieren einer Monomerkomponente, welche 1 bis 80 Masse-% eines Hydroxylalkyl(meth)acrylats mit einer hydroxylgruppenhaltigen Alkylgruppe mit einer Kohlenstoffanzahl von 1 bis 8, 20 bis 99 Masse-% Alkylmethacrylat mit einer Alkylgruppe mit einer Kohlenstoffanzahl von 1 bis 13 und 0 bis 79 Masse-% Alkylacrylat mit einer Alkylgruppe mit einer Kohlenstoffanzahl von 1 bis 8, enthält.

$$SPA - SPF \geq 5 \ J^{1/2} \ cm^{-3/2} \qquad (1)$$

$$SPA - SPF \leq 6{,}8 \ J^{1/2} \ cm^{-3/2} \qquad (2)$$

6. Verfahren zur Herstellung der laminierten Fluor-Mattfolie (F2) nach Anspruch 5, umfassend einen Formgebungsschritt, bei dem die Fluor-Mattharzschicht (I) und die Acrylharzschicht (II) coextrudiert werden.

7. Laminierte Fluor-Mattdekorfolie (F3), welche weiterhin eine dekorative Schicht (III) auf mindestens einer Seite der laminierten Fluor-Mattfolie (F2) nach Anspruch 5 umfasst.

8. Laminierte Folie (F4), erhalten durch Laminieren einer thermoplastischen Schicht (IV) auf eine Folie, welche aus der Gruppe gewählt ist, bestehend aus der Fluor-Mattfolie (F1) nach Anspruch 1, der laminierten Fluor-Mattfolie (F2) nach Anspruch 5 und der laminierten Fluor-Mattdekorfolie (F3) nach Anspruch 7.

9. Laminierter Formartikel, erhalten durch Laminieren einer Folie oder eines Blatts auf ein Substrat (V), wobei die Folie oder das Blatt gewählt ist aus der Gruppe, bestehend aus der Fluor-Mattfolie (F1) nach Anspruch 1, der laminierten Fluor-Mattfolie (F2) nach Anspruch 5, der laminierten Fluor-Mattdekorfolie (F3) nach Anspruch 7 und der laminierten Folie (F4) nach Anspruch 8.

## Revendications

1. Film de fluor givré (F1) qui comprend

100 parties en masse d'une résine de fluor (A) et

1 à 18 parties en masse (pour 100 parties en masse de la résine de fluor (A)) d'une résine acrylique non réticulée (B), dans lequel le paramètre de solubilité (SPF) de la résine de fluor (A) et le paramètre de solubilité (SPA) de la résine acrylique non réticulée (B) satisfont les équations (1)

et 2 suivantes, et

dans lequel la résine acrylique non réticulée (B) est un polymère contenant un groupe hydroxyle, qui est un polymère obtenu par copolymérisation d'un composant monomère qui contient 1 à 80 % en masse de (méth)acrylate d'hydroxyalkyle ayant un groupe alkyle contenant un groupe hydroxyle avec un nombre d'atomes de carbone de 1 à 8, 20 à 99 % en masse de méthacrylate d'alkyle ayant un groupe alkyle avec un nombre d'atomes de carbone de 1 à 13, et 0 à 79 % en masse d'acrylate d'alkyle ayant un groupe alkyle avec un nombre d'atomes de carbone de 1 à 8.

$$SPA - SPF \geq 5 \ J^{1/2} \ cm^{-3/2} \qquad (1)$$

$$SPA - SPF \leq 6{,}8 \ J^{1/2} \ cm^{-3/2} \qquad (2)$$

2. Film de fluor givré (F1) selon la revendication 1, dans lequel le paramètre de solubilité (SPFA) du film de fluor givré (F1) est de 17 à 18 $J^{1/2} \ cm^{-3/2}$.

3. Film de fluor givré (F1) selon la revendication 1, dans lequel la résine de fluor (A) est un polymère de fluorure de vinylidène.

4. Procédé de production du film de fluor givré (F1) selon la revendication 1, comprenant une étape de moulage par un procédé de matrice en T.

5. Film de fluor givré stratifié (F2) obtenu par stratification d'une couche de résine acrylique (II) sur une couche de résine de fluor givré (I) qui comprend 100 parties en masse d'une résine de fluor (A) et 1 à 18 parties en masse (pour 100 parties en masse de la résine de fluor (A)) d'une résine acrylique non réticulée (B), et
dans lequel le paramètre de solubilité (SPF) de la résine de fluor (A) et le paramètre de solubilité (SPA) de la résine acrylique non réticulée (B) satisfont les équations (1)
et (2) suivantes, et
dans lequel la résine acrylique non réticulée (B) est un polymère contenant un groupe hydroxyle, qui est un polymère obtenu par copolymérisation d'un composant monomère qui contient 1 à 80 % en masse de (méth)acrylate d'hydroxyalkyle ayant un groupe alkyle contenant un groupe hydroxyle avec un nombre d'atomes de carbone de 1 à 8, 20 à 99 % en masse de méthacrylate d'alkyle ayant un groupe alkyle avec un nombre d'atomes de carbone de 1 à 13, et 0 à 79 % en masse d'acrylate d'alkyle ayant un groupe alkyle avec un nombre d'atomes de carbone de 1 à 8.

$$SPA - SPF \geq 5 \ J^{1/2} \ cm^{-3/2} \qquad (1)$$

$$SPA - SPF \leq 6{,}8 \ J^{1/2} \ cm^{-3/2} \qquad (2)$$

6. Procédé de production du film de fluor givré stratifié (F2) selon la revendication 5, comprenant une étape de moulage dans laquelle la couche de résine de fluor givré (I) et la couche de résine acrylique (II) sont coextrudées.

7. Film de fluor givré stratifié décoratif (F3) qui comprend en outre une couche décorative (III) sur au moins une face du film de fluor givré stratifié (F2) selon la revendication 5.

8. Feuille stratifiée (F4) obtenue par stratification d'une couche thermoplastique (IV) sur un film qui est choisi dans le groupe constitué du film de fluor givré (F1) selon la revendication 1, du film de fluor givré stratifié (F2) selon la revendication 5, et du film de fluor givré stratifié décoratif (F3) selon la revendication 7.

9. Article moulé stratifié obtenu par stratification d'un film ou d'une feuille sur un substrat (V), dans lequel le film ou la feuille est choisi dans le groupe constitué du film de fluor givré (F1) selon la revendication 1, du film de fluor givré stratifié (F2) selon la revendication 5, du film de fluor givré stratifié décoratif (F3) selon la revendication 7, et de la feuille stratifiée (F4) selon la revendication 8.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001205755 A
- JP 2008007709 A
- JP 2005139416 A
- JP 51076345 A
- JP 1168702 A
- JP 62019309 B
- JP 63008983 B
- JP 8323934 A

- JP 11147237 A
- JP 2002080678 A
- JP 2002080679 A
- JP 2005097351 A
- JP 2004137298 A
- JP 2005163003 A
- JP 2008106252 A
- JP 2002361712 A

**Non-patent literature cited in the description**

- **R. F. FEDORS.** *Polym. Eng. Sci.,* 1974, vol. 14, 147

- **J. BRANDRUP.** Polymer Handbook. Interscience, 1989